# EUROPEAN PATENT APPLICATION

(11) **EP 4 708 009 A1**
(43) Date of publication of application: **11.03.2026**
(21) Application number: 24818286.7
(22) Date of filing: 28.02.2024
(51) Int. Cl.: G06F 3/0481

(54) **INTERACTION METHOD, ELECTRONIC DEVICE AND COMPUTER-READABLE STORAGE MEDIUM**

(30) Priority: 05.06.2023 CN 202310661085
(71) Applicant: Huawei Technologies Co., Ltd., Shenzhen, Guangdong 518129 (CN)
(72) Inventor: WANG, Yincheng, Shenzhen, Guangdong 518129 (CN); HE, Liping, Shenzhen, Guangdong 518129 (CN); ZHANG, Yanan, Shenzhen, Guangdong 518129 (CN); FENG, Yu, Shenzhen, Guangdong 518129 (CN); LONG, Jiayu, Shenzhen, Guangdong 518129 (CN); LIU, Yanfang, Shenzhen, Guangdong 518129 (CN); ZHANG, Yubo, Shenzhen, Guangdong 518129 (CN); HAO, Huaqi, Shenzhen, Guangdong 518129 (CN)
(74) Representative: Pfenning, Meinig & Partner mbB
(86) International application number: PCT/CN2024/079069
(87) International publication number: WO 2024/250749

(57) **Abstract**

This application is applicable to the field of terminal technologies, and in particular, relates to an interaction method, an electronic device, and a computer-readable storage medium. In the method, the electronic device may display a first control on a display interface, and when detecting an interaction operation performed on the first control, determine a first position of the interaction operation on the display interface. When the first position is located on a left side of the display interface, the electronic device may display, on the left side of the display interface, a first window in response to the interaction operation; or when the first position is located on a right side of the display interface, the electronic device may display the first window on the right side of the display interface. In other words, in this application, when detecting the interaction operation performed on the first control, the electronic device may display the first window on the left or right side of the display interface based on the first position of the interaction operation on the display interface, so that the first window is located at a position that is on the display interface and that is convenient for a user to perform an operation. This helps the user perform the operation on the first window, thereby improving operation convenience and user experience.

## Description

This application claims priority to Chinese Patent Application No. 202310661085.7, filed with the China National Intellectual Property Administration on June 5, 2023 and entitled "INTERACTION METHOD, ELECTRONIC DEVICE, AND COMPUTER-READABLE STORAGE MEDIUM", which is incorporated herein by reference in its entirety.

### TECHNICAL FIELD

This application pertains to the field of terminal technologies, and in particular, relates to an interaction method, an electronic device, and a computer-readable storage medium.

### BACKGROUND

An existing electronic device is usually provided with a touch display. A user may perform an interaction operation on the touch display to interact with the electronic device, so as to use the electronic device. When detecting the interaction operation performed on the touch display, the electronic device may display a corresponding window on a display interface in response to the interaction operation. The user may continue to operate content in the window for interaction. However, in some cases, for example, in an electronic device with a large display, a window displayed by the electronic device is inconvenient for the user to perform an operation, resulting in poor user experience.

### SUMMARY

Embodiments of this application provide an interaction method, an electronic device, and a computer-readable storage medium, to resolve a problem in a conventional technology, where a window displayed by the electronic device is inconvenient for a user to perform an operation, resulting in poor user experience.

According to a first aspect, an embodiment of this application provides an interaction method, applied to an electronic device. The method may include:

The electronic device displays a first control on a display interface;
the electronic device detects an interaction operation performed on the first control;
the electronic device determines a first position of the interaction operation on the display interface; and
when the first position is located on a left side of the display interface, the electronic device displays a first window on the left side of the display interface, where content displayed in the first window is content in response to the interaction operation; or
when the first position is located on a right side of the display interface, the electronic device displays the first window on the right side of the display interface.

In the foregoing interaction method, the electronic device may display the first control on the display interface, and when detecting the interaction operation performed on the first control, the electronic device may determine the first position of the interaction operation on the display interface. When the first position is a position on the left side of the display interface, the electronic device may display the first window on the left side of the display interface; or when the first position is a position on the right side of the display interface, the electronic device may display the first window on the right side of the display interface. The content displayed in the first window is the content in response to the interaction operation. In other words, when detecting the interaction operation performed on the first control, the electronic device may display the first window on the left or right side of the display interface based on the first position of the interaction operation on the display interface, so that the first window is located at a position that is on the display interface and that is convenient for a user to perform an operation. This helps the user continue to perform interaction based on the first window, thereby improving operation convenience and user experience.

Optionally, a length of the first control is greater than or equal to a preset length.

In the interaction method provided in this implementation, the first control may be a large control with a large operation region. To be specific, in a large control scenario, the electronic device may display the first window on the left or right side of the display interface based on the first position of the interaction operation on the display interface, so that the first window is located at a position that is on the display interface and that is convenient for a user to perform an operation. This helps the user continue to perform interaction based on the first window, thereby improving user experience.

For example, the electronic device may determine, based on a width of the first control, whether the first control is the large control with the large operation region. Specifically, when the width of the first control is greater than or equal to a preset width, the electronic device may determine that the first control is the large control with the large operation region.

For example, the electronic device may determine, based on a height of the first control, whether the first control is the large control with the large operation region. Specifically, when the height of the first control is greater than or equal to a preset height, the electronic device may determine that the first control is the large control with the large operation region.

In a possible implementation of the first aspect, that the electronic device displays the first window on the left side of the display interface may include:

The electronic device displays the first window at a first preset position on the left side of the display interface.

In the interaction method provided in this implementation, when the first window is displayed on the left side of the display interface, the electronic device may display the first window at the first preset position on the left side. It should be understood that the first preset position may be set by the electronic device by default. For example, the electronic device may set the first preset position to any position in a comfortable operation region on the left side of the display interface by default, to display the first window in the comfortable operation region on the left side of the display interface. This helps the user operate the first window, thereby improving user experience.

It may be understood that the comfortable operation region is a region in which the user can conveniently perform an operation on the display interface. The comfortable operation region may be determined in an existing determining manner.

Optionally, that the electronic device displays the first window at the first preset position on the left side of the display interface may include:

When the first window is displayed at the first preset position, and a left edge of the first window exceeds a left edge of the display interface, the electronic device updates the first preset position, and displays the first window at an updated first preset position, so that the left edge of the first window does not exceed the left edge of the display interface.

In the interaction method provided in this implementation, when the first window is displayed at the first preset position, the electronic device may determine, based on a size of the first window and the left edge of the display interface, whether the left edge of the first window exceeds the left edge of the display interface. When the left edge of the first window exceeds the left edge of the display interface, the electronic device may update the first preset position, and display the first window at the updated first preset position. For example, the electronic device may move the first preset position rightward, to move the first window rightward, so that the left edge of the first window does not exceed the left edge of the display interface. In this way, the first window can be completely displayed on the display interface. This improves display effect.

Similarly, that the electronic device displays the first window on the right side of the display interface may include:

The electronic device displays the first window at a second preset position on the right side of the display interface.

In the interaction method provided in this implementation, when the first window is displayed on the right side of the display interface, the electronic device may display the first window at the second preset position on the right side. It should be understood that the second preset position may be set by the electronic device by default. For example, the electronic device may set the second preset position to any position in a comfortable operation region on the right side of the display interface by default, to display the first window in the comfortable operation region on the right side of the display interface. This helps the user operate the first window, thereby improving user experience.

Optionally, that the electronic device displays the first window at the second preset position on the right side of the display interface may include:

When the first window is displayed at the second preset position, and a right edge of the first window exceeds a right edge of the display interface, the electronic device updates the second preset position, and displays the first window at an updated second preset position, so that the right edge of the first window does not exceed the right edge of the display interface.

In the interaction method provided in this implementation, when the first window is displayed at the second preset position, the electronic device may determine, based on the size of the first window and the right edge of the display interface, whether the right edge of the first window exceeds the right edge of the display interface. When the right edge of the first window exceeds the right edge of the display interface, the electronic device may update the second preset position, and display the first window at the updated second preset position. For example, the electronic device may move the second preset position leftward, to move the first window leftward, so that the right edge of the first window does not exceed the right edge of the display interface. In this way, the first window can be completely displayed on the display interface. This improves display effect.

In another possible implementation of the first aspect, that the electronic device displays the first window on the left side of the display interface may include:

The electronic device displays the first window on the left side of the display interface based on a size of the first window and a left edge of the display interface, where a left edge of the first window does not exceed the left edge of the display interface.

In the interaction method provided in this implementation, when the first position of the interaction operation on the display interface is the position on the left side of the display interface, the electronic device may directly display the first window on the left side of the display interface based on the size of the first window and the left edge of the display interface. When the first window is displayed on the left side of the display interface, the left edge of the first window does not exceed the left edge of the display interface. For example, there may be a preset distance between the left edge of the first window and the left edge of the display interface. In this way, the first window can be completely displayed on the display interface. This improves display effect, and ensures good touch reachability of the first window, thereby facilitating a user operation.

Similarly, that the electronic device displays the first window on the right side of the display interface may include:

The electronic device displays the first window on the right side of the display interface based on the size of the first window and a right edge of the display interface, where a right edge of the first window does not exceed the right edge of the display interface.

In the interaction method provided in this implementation, when the first position of the interaction operation on the display interface is the position on the right side of the display interface, the electronic device may directly display the first window on the right side of the display interface based on the size of the first window and the right edge of the display interface. When the first window is displayed on the right side of the display interface, the right edge of the first window does not exceed the right edge of the display interface. For example, there may be a preset distance between the right edge of the first window and the right edge of the display interface. In this way, the first window can be completely displayed on the display interface. This improves display effect, and ensures good touch reachability of the first window, thereby facilitating a user operation.

In another possible implementation of the first aspect, that the electronic device displays the first window on the left side of the display interface may include:

The electronic device displays the first window on the left side of the display interface based on the first position, a size of the first window, and a left edge of the display interface, where a position of the first window on the left side of the display interface is determined based on the first position, or a left edge of the first window does not exceed the left edge of the display interface.

In the interaction method provided in this implementation, when the first position of the interaction operation on the display interface is the position on the left side of the display interface, the electronic device may display the first window on the left side of the display interface based on the first position, the size of the first window, and the left edge of the electronic device, so that the first window is located on the left side of the display interface and close to a position at which the user performs the interaction operation. This ensures hand-following of the first window, reduces a line-of-sight jump of the user, and helps the user perform an operation on the first window, thereby improving user experience.

When the first window is displayed on the left side of the display interface based on the first position, the size of the first window, and the left edge of the electronic device, the electronic device may determine the display position of the first window on the left side of the display interface based on the first position. When determining, based on the size of the first window and the left edge of the display interface, that the first window displayed at the display position exceeds the left edge of the display interface, the electronic device may update the display position based on the left edge of the first window and the left edge of the display interface, and display the first window at an updated display position, so that the left edge of the first window does not exceed the left edge of the display interface.

Similarly, that the electronic device displays the first window on the right side of the display interface may include:

The electronic device displays the first window on the right side of the display interface based on the first position, the size of the first window, and a right edge of the display interface, where a position of the first window on the right side of the display interface is determined based on the first position, or a right edge of the first window does not exceed the right edge of the display interface.

In the interaction method provided in this implementation, when the first position of the interaction operation on the display interface is the position on the right side of the display interface, the electronic device may display the first window on the right side of the display interface based on the first position, the size of the first window, and the right edge of the electronic device, so that the first window is located on the right side of the display interface and close to a position at which the user performs the interaction operation. This ensures hand-following of the first window, reduces a line-of-sight jump of the user, and helps the user perform an operation on the first window, thereby improving user experience.

When the first window is displayed on the right side of the display interface based on the first position, the size of the first window, and the right edge of the electronic device, the electronic device may determine the display position of the first window on the right side of the display interface based on the first position. When determining, based on the size of the first window and the right edge of the display interface, that the first window displayed at the display position exceeds the right edge of the display interface, the electronic device may update the display position based on the right edge of the first window and the right edge of the display interface, and display the first window at an updated display position, so that the right edge of the first window does not exceed the left edge of the display interface.

In an example, that the electronic device displays the first window on the left side of the display interface may include:

When the first window is completely displayable above the first control on the display interface, the electronic device displays the first window above the first control on the left side of the display interface; or
when the first window is not completely displayable above the first control on the display interface, the electronic device displays the first window below the first control on the left side of the display interface.

In another example, that the electronic device displays the first window on the right side of the display interface may include:

When the first window is completely displayable above the first control on the display interface, the electronic device displays the first window above the first control on the right side of the display interface; or
when the first window is not completely displayable above the first control on the display interface, the electronic device displays the first window below the first control on the right side of the display interface.

In the interaction method provided in this implementation, after detecting the interaction operation performed on the first control, the electronic device may still display the first control on the display interface. In this case, to prevent the first window from blocking the first control, improve display effect of the interface, and improve user experience, when displaying the first window on the left or right side of the display interface, the electronic device may alternatively display the first window based on an upper edge or a lower edge of the first control.

For example, when the first window is completely displayable above the first control on the display interface, for example, when a distance between the upper edge of the first control and an upper edge of the display interface is greater than or equal to a height of the first window, it indicates that the first window can be completely displayed above the first control. In this case, the electronic device may display the first window from bottom to top above the first control. In other words, when the first control is close to a lower edge of the display interface, the electronic device may display the first window upward from the top of the first control.

For example, when determining to display the first window on the left side of the display interface, the electronic device may display the first window upward from the top of the first control on the left side of the display interface; or when determining to display the first window on the right side of the display interface, the electronic device may display the first window upward from the top of the first control on the right side of the display interface.

Optionally, when the first window is displayed from bottom to top at the top of the first control, there may be a preset distance between a lower edge of the first window and the upper edge of the first control, to ensure good touch reachability of the first window, thereby facilitating a user operation and improving user experience.

For example, when the first window is not completely displayable above the first control on the display interface, for example, when a distance between the upper edge of the first control and an upper edge of the display interface is less than a height of the first window, it indicates that the first window cannot be completely displayed above the first control. In this case, the electronic device may display the first window from top to bottom below the first control. In other words, when the first control is close to the upper edge of the display interface, the electronic device may display the first window downward from the bottom of the first control.

For example, when determining to display the first window on the left side of the display interface, the electronic device may display the first window downward from the bottom of the first control on the left side of the display interface; or when determining to display the first window on the right side of the display interface, the electronic device may display the first window downward from the bottom of the first control on the right side of the display interface.

Optionally, when the first window is displayed from top to bottom at the bottom of the first control, there may be a preset distance between an upper edge of the first window and the lower edge of the first control, to ensure good touch reachability of the first window, thereby facilitating a user operation and improving user experience.

For example, after the interaction operation performed on the first control is detected, the first control may no longer be displayed on the display interface of the electronic device. In this case, the electronic device may display the first window on the left or right side of the display interface based on the first position of the interaction operation on the display interface.

For example, when the first position is located on the left side of the display interface, the electronic device may display the first window in the comfortable operation region on the left side of the display interface based on the size of the first window and the left edge of the display interface; or the electronic device may display the first window in the comfortable operation region on the left side of the display interface based on the first position, the size of the first window, and the left edge of the display interface, and the displayed first window is close to the first position, to reduce a line-of-sight jump of the user and help the user operate the first window.

Similarly, when the first position is located on the right side of the display interface, the electronic device may display the first window in the comfortable operation region on the right side of the display interface based on the size of the first window and the right edge of the display interface; or the electronic device may display the first window in the comfortable operation region on the right side of the display interface based on the first position, the size of the first window, and the right edge of the display interface, and the displayed first window is close to the first position, to reduce a line-of-sight jump of the user and help the user operate the first window.

In a possible implementation of the first aspect, the display interface includes a left display region and a right display region in a left-right split-screen mode.

After the electronic device determines the first position of the interaction operation on the display interface, the method may further include:

When the first position is located in the left display region, the electronic device determines that the first position is located on the left side of the display interface; or
when the first position is located in the right display region, the electronic device determines that the first position is located on the right side of the display interface.

In the interaction method provided in this implementation, when the display interface includes the left display region and the right display region in the left-right split-screen mode, the left display region is a region on the left side of the display interface, and the right display region is a region on the right side of the display interface. Therefore, when the first position is any position in the left display region, the electronic device may determine that the first position is located on the left side of the display interface, and may display the first window on the left side of the display interface. When the first position is any position in the right display region, the electronic device may determine that the first position is located on the right side of the display interface, and may display the first window on the right side of the display interface, to improve display efficiency and user experience.

For example, a first control A corresponding to an application A may be displayed in the left display region, and a first control B corresponding to an application B may be displayed in the right display region. When the user performs the interaction operation on the first control A, for example, performs the interaction operation at any position of the first control A, the electronic device may determine that the first position of the interaction operation on the display interface is a position on the left side of the display interface, and may display, on the left side of the display interface, a first window A corresponding to the first control A. When the user performs the interaction operation on the first control B, for example, performs the interaction operation at any position of the first control B, the electronic device may determine that the first position of the interaction operation on the display interface is a position on the right side of the display interface, and may display, on the right side of the display interface, a first window B corresponding to the first control B.

For example, the left display region may further include a first left display region and a second left display region in an upper-lower split-screen mode. The first control A corresponding to the application A may be displayed in the first left display region, and a first control C corresponding to an application C may be displayed in the second left display region.

When the user performs the interaction operation on the first control A, the electronic device may determine that the first position of the interaction operation on the display interface is a position on the left side of the display interface. In this case, the electronic device may display, on the left side of the display interface, the first window A corresponding to the first control A. When the user performs the interaction operation on the first control C, the electronic device may also determine that the first position of the interaction operation on the display interface is a position on the left side of the display interface. In this case, the electronic device may display, on the left side of the display interface, a first window C corresponding to the first control C.

Optionally, the electronic device may display the first window A and the first window C in a same display region. For example, the first window A and the first window C may be displayed in the first left display region, or the first window A and the first window C may be displayed in the second left display region. To be specific, when the user performs the interaction operation on the first control A, the electronic device may display the first window A in the first left display region, and when the user performs the interaction operation on the first control C, the electronic device may also display the first window C in the first left display region; or when the user performs the interaction operation on the first control A, the electronic device may display the first window A in the second left display region, and when the user performs the interaction operation on the first control C, the electronic device may also display the first window C in the second left display region.

In another example, the electronic device may display the first window A and the first window C in different display regions. For example, the electronic device may display the first window A in the first left display region, and may display the first window C in the second left display region.

In another possible implementation of the first aspect, the display interface includes an upper display region and a lower display region in an upper-lower split-screen mode.

After the electronic device determines the first position of the interaction operation on the display interface, the method may further include:

When the first position is located on a left side of the upper display region or a left side of the lower display region, the electronic device determines that the first position is located on the left side of the display interface; or
when the first position is located on a right side of the upper display region or a right side of the lower display region, the electronic device determines that the first position is located on the right side of the display interface.

In the interaction method provided in this implementation, when the display interface includes the upper display region and the lower display region in the upper-lower split-screen mode, because both the upper display region and the lower display region each include a region on the left side of the display interface and a region on the right side of the display interface, when the first position is located in the upper display region or the lower display region, the electronic device needs to determine whether the first position is located on the left side or the right side of the display interface, to determine to display the first window on the left side or the right side of the display interface.

For example, a first control A corresponding to an application A may be displayed in the upper display region, and a first control B corresponding to an application B may be displayed in the lower display region. When the user performs the interaction operation on the first control A, the electronic device may determine the first position of the interaction operation on the display interface. When the first position is a position on the left side of the display interface, the electronic device may display, on the left side of the display interface, a first window A corresponding to the first control A; or when the first position is a position on the right side of the display interface, the electronic device may display, on the right side of the display interface, a first window A corresponding to the first control A.

Similarly, when the user performs the interaction operation on the first control B, the electronic device may determine the first position of the interaction operation on the display interface. When the first position is a position on the left side of the display interface, the electronic device may display, on the left side of the display interface, a first window B corresponding to the first control B; or when the first position is a position on the right side of the display interface, the electronic device may display, on the right side of the display interface, a first window B corresponding to the first control B.

In an example, the electronic device may display the first window A and the first window B in a same region. For example, the first window A and the first window B may be displayed in the upper display region, or the first window A and the first window B may be displayed in the lower display region. To be specific, when the user performs the interaction operation on the first control A, the electronic device may display the first window A on a left or right side of the upper display region, and when the user performs the interaction operation on the first control B, the electronic device may also display the first window B on the left or right side of the upper display region; or
when the user performs the interaction operation on the first control A, the electronic device may display the first window A on a left or right side of the lower display region, and when the user performs the interaction operation on the first control B, the electronic device may also display the first window B on the left or right side of the lower display region.

In another example, the electronic device may display the first window A and the first window B in different regions. For example, the electronic device may display the first window A on a left or right side of the upper display region, and display the first window B on a left or right side of the lower display region.

According to a second aspect, an embodiment of this application provides an interaction method, applied to an electronic device. The method may include:

The electronic device displays a first control on a display interface;
the electronic device detects an interaction operation performed on the first control;
the electronic device determines whether the interaction operation is performed by a left hand or a right hand; and
when determining that the interaction operation is performed by the left hand, the electronic device displays a first window on a left side of the first control, where content displayed in the first window is content in response to the interaction operation; or
when determining that the interaction operation is performed by the right hand, the electronic device displays the first window on a right side of the first control.

In the foregoing interaction method, the electronic device may display the first control on the display interface, and when detecting the interaction operation performed on the first control, the electronic device may determine whether the interaction operation is performed by the left hand or the right hand. When the interaction operation is performed by the left hand, the electronic device may display the first window on the left side of the first control; or when the interaction operation is performed by the right hand, the electronic device may display the first window on the right side of the first control. The content displayed in the first window is the content in response to the interaction operation. In other words, when detecting the interaction operation performed on the first control, the electronic device may display the first window based on the left/right hand that performs the interaction operation, so that the displayed first window is close to a hand of a user that performs the interaction operation. This helps the user continue to operate the first window by using the left/right hand, thereby improving user experience.

Optionally, a length of the first control is less than a preset length.

In the interaction method provided in this implementation, the first control may be a small control with a small operation region. To be specific, in a small control scenario, the electronic device may display the first window on the left or right side of the first control based on whether the interaction operation is performed by the left hand or the right hand, so that the first window is located close to the hand of the user that performs the interaction operation. This helps the user continue to perform interaction based on the first window, thereby improving user experience.

For example, the electronic device may determine, based on a width of the first control, whether the first control is the small control with the small operation region. Specifically, when the width of the first control is less than a preset width, the electronic device may determine that the first control is the small control with the small operation region.

For example, the electronic device may determine, based on a height of the first control, whether the first control is the small control with the small operation region. Specifically, when the height of the first control is less than a preset height, the electronic device may determine that the first control is the small control with the small operation region.

In a possible implementation of the second aspect, that the electronic device displays the first window on the left side of the first control may include:

The electronic device displays the first window at a first preset position on the left side of the first control.

It should be understood that the first preset position may be specifically determined based on an actual scenario. For example, the electronic device may set any position in a comfortable operation region on the left side of the first control as the first preset position by default. For example, the electronic device may set, by default, the first preset position as a position that is on the left side of the first control and that is at a preset distance from the first control.

For example, that the electronic device displays the first window at the first preset position on the left side of the first control may include:

When the first window is displayed at the first preset position, and a left edge of the first window exceeds a left edge of the display interface, the electronic device updates the first preset position to obtain a third preset position, and displays the first window at the third preset position, so that the left edge of the first window does not exceed the left edge of the display interface.

In the interaction method provided in this implementation, when the first window is displayed at the first preset position, the electronic device may determine, based on a size of the first window and the left edge of the display interface, whether the left edge of the first window exceeds the left edge of the display interface. When the left edge of the first window exceeds the left edge of the display interface, the electronic device may update the first preset position to obtain the third preset position, and display the first window at the third preset position. For example, the electronic device may move the first preset position rightward, to move the first window rightward, so that the left edge of the first window does not exceed the left edge of the display interface. In this way, the first window can be completely displayed on the display interface. This improves display effect.

Optionally, that the electronic device displays the first window at the third preset position may include:

When the first window is displayed at the third preset position, and the first window overlaps the first control, the electronic device updates the third preset position, and displays the first window at an updated third preset position, so that the first window does not overlap the first control.

In the interaction method provided in this implementation, after detecting the interaction operation performed on the first control, the electronic device may still display the first control on the display interface. In this case, after updating the first preset position to obtain the third preset position, the electronic device may further determine whether the first window blocks the first control when the first window is displayed at the third preset position. When the first window blocks the first control, the electronic device may update the third preset position, for example, may move the third preset position upward or downward based on an upper edge or a lower edge of the first control, so that the first window displayed at the updated third preset position does not overlap the first control. This prevents the first window from blocking the first control, thereby improving display effect of the interface and user experience.

In another possible implementation of the second aspect, that the electronic device displays the first window on the right side of the first control includes:

The electronic device displays the first window at a second preset position on the right side of the first control.

It should be understood that the second preset position may be specifically determined based on an actual scenario. For example, the electronic device may set any position in a comfortable operation region on the right side of the first control as the second preset position by default. For example, the electronic device may set, by default, the second preset position as a position that is on the right side of the first control and that is at a preset distance from the first control.

For example, that the electronic device displays the first window at the second preset position on the right side of the first control may include:

When the first window is displayed at the second preset position, and a right edge of the first window exceeds a right edge of the display interface, the electronic device updates the second preset position to obtain a fourth preset position, and displays the first window at the fourth preset position, so that the right edge of the first window does not exceed the right edge of the display interface.

In the interaction method provided in this implementation, when the first window is displayed at the second preset position, the electronic device may determine, based on the size of the first window and the right edge of the display interface, whether the right edge of the first window exceeds the right edge of the display interface. When the right edge of the first window exceeds the right edge of the display interface, the electronic device may update the second preset position to obtain the fourth preset position, and display the first window at the fourth preset position. For example, the electronic device may move the first preset position leftward, to move the first window leftward, so that the right edge of the first window does not exceed the right edge of the display interface. In this way, the first window can be completely displayed on the display interface. This improves display effect.

Optionally, that the electronic device displays the first window at the fourth preset position may include:
When the first window is displayed at the fourth preset position, and the first window overlaps the first control, the electronic device updates the fourth preset position, and displays the first window at an updated fourth preset position, so that the first window does not overlap the first control.

In the interaction method provided in this implementation, after detecting the interaction operation performed on the first control, the electronic device may still display the first control on the display interface. In this case, after updating the second preset position to obtain the fourth preset position, the electronic device may further determine whether the first window blocks the first control when the first window is displayed at the fourth preset position. When the first window blocks the first control, the electronic device may update the fourth preset position, for example, may move the fourth preset position upward or downward based on an upper edge or a lower edge of the first control, so that the first window displayed at the updated fourth preset position does not overlap the first control. This prevents the first window from blocking the first control, thereby improving display effect of the interface and user experience.

In an example, when the interaction operation is performed by the left hand of the user, the electronic device may directly display the first window on the left side of the first control based on a size of the first window and a left edge of the first control; or when the interaction operation is performed by the right hand of the user, the electronic device may directly display the first window on the right side of the first control based on a size of the first window and a right edge of the first control. When the first window is displayed on the left side of the first control, the left edge of the first window does not exceed the left edge of the display interface, and there may be a preset distance between the right edge of the first window and the left edge of the first control; or when the first window is displayed on the right side of the first control, the right edge of the first window does not exceed the right edge of the display interface, and there may be a preset distance between the left edge of the first window and the right edge of the first control, to facilitate a user operation and improve user experience.

In a possible implementation of the second aspect, the first window is a gradually expanding window.

That the electronic device displays the first window on the left side of the first control may include:

The electronic device displays the first window at the first preset position on the left side of the first control, and controls the first window to gradually expand in a direction toward the left side of the first control.

In another possible implementation of the second aspect, the first window is a gradually expanding window.

That the electronic device displays the first window on the right side of the first control may include:

The electronic device displays the first window at the second preset position on the right side of the first control, and controls the first window to gradually expand in a direction toward the right side of the first control.

In the interaction method provided in this implementation, the electronic device may display the first window in an animation manner. For example, the first window may be displayed in a gradually expanding manner. When the first window is displayed in the gradually expanding manner, the electronic device may gradually expand the first window leftward or rightward based on whether the first window is located on the left or right side of the first control, so that an animation change direction of the first window is the same as a display direction of the first window. This can reduce a line-of-sight jump of the user and improve user experience.

It should be understood that, when displaying the first window in the gradually expanding manner and determining to display the first window on the left side of the first control, the electronic device may determine an initial position of the first window on the left side of the first control, and display the initial first window at the initial position. After displaying the initial first window, the electronic device may control the first window to gradually expand in the direction toward the left side of the first control. The initial position of the first window on the left side of the first control may be specifically determined based on an actual situation. For example, the initial position of the first window on the left side of the first control may be the first preset position determined above.

Similarly, when determining to display the first window on the right side of the first control, the electronic device may determine an initial position of the first window on the right side of the first control, and display the initial first window at the initial position. After displaying the initial first window, the electronic device may control the first window to gradually expand in the direction toward the right side of the first control. The initial position of the first window on the right side of the first control may be specifically determined based on an actual situation. For example, the initial position of the first window on the right side of the first control may be the second preset position determined above.

Optionally, when displaying the first window in the gradually expanding manner, the electronic device may determine a natural field of view region on the display interface, and gradually expand the first window based on the natural field of view region. The first window finally displayed on the display interface does not exceed the natural field of view region. For example, a final length of the first window is less than or equal to a length of the natural field of view region, and a final height of the first window is less than or equal to a height of the natural field of view region.

According to a third aspect, an embodiment of this application provides an interaction apparatus, used in an electronic device. The apparatus may include:
a control display module, configured to display a first control on a display interface;
an operation detection module, configured to detect an interaction operation performed on the first control;
a first position determining module, configured to determine a first position of the interaction operation on the display interface;
a first window display module, configured to: when the first position is located on a left side of the display interface, display a first window on the left side of the display interface, where content displayed in the first window is content in response to the interaction operation; and
a second window display module, configured to: when the first position is located on a right side of the display interface, display the first window on the right side of the display interface.

Optionally, a length of the first control is greater than or equal to a preset length.

In a possible implementation of the third aspect, the first window display module is specifically configured to display the first window at a first preset position on the left side of the display interface.

Optionally, the first window display module is further configured to: when the first window is displayed at the first preset position, and a left edge of the first window exceeds a left edge of the display interface, the electronic device updates the first preset position, and displays the first window at an updated first preset position, so that the left edge of the first window does not exceed the left edge of the display interface.

Similarly, the second window display module is specifically configured to display the first window at a second preset position on the right side of the display interface.

Optionally, the second window display module is further configured to: when the first window is displayed at the second preset position, and a right edge of the first window exceeds a right edge of the display interface, the electronic device updates the second preset position, and displays the first window at an updated second preset position, so that the right edge of the first window does not exceed the right edge of the display interface.

In another possible implementation of the third aspect, the first window display module is further configured to display the first window on the left side of the display interface based on a size of the first window and a left edge of the display interface, where a left edge of the first window does not exceed the left edge of the display interface.

Similarly, the second window display module is further configured to display the first window on the right side of the display interface based on the size of the first window and a right edge of the display interface, where a right edge of the first window does not exceed the right edge of the display interface.

In another possible implementation of the third aspect, the first window display module is further configured to display the first window on the left side of the display interface based on the first position, a size of the first window, and a left edge of the display interface, where a position of the first window on the left side of the display interface is determined based on the first position, or a left edge of the first window does not exceed the left edge of the display interface.

Similarly, the second window display module is further configured to display the first window on the right side of the display interface based on the first position, the size of the first window, and a right edge of the display interface, where a position of the first window on the right side of the display interface is determined based on the first position, or a right edge of the first window does not exceed the right edge of the display interface.

In an example, the first window display module is further configured to: when the first window is completely displayable above the first control on the display interface, display the first window above the first control on the left side of the display interface; or
when the first window is not completely displayable above the first control on the display interface, display the first window below the first control on the left side of the display interface.

In another example, the second window display module is further configured to: when the first window is completely displayable above the first control on the display interface, display the first window above the first control on the right side of the display interface; or
when the first window is not completely displayable above the first control on the display interface, display the first window below the first control on the right side of the display interface.

In a possible implementation of the third aspect, the display interface includes a left display region and a right display region in a left-right split-screen mode.

The apparatus may further include:
a first region determining module, configured to: when the first position is located in the left display region, determine that the first position is located on the left side of the display interface; and
a second region determining module, configured to: when the first position is located in the right display region, determine that the first position is located on the right side of the display interface.

In another possible implementation of the third aspect, the display interface includes an upper display region and a lower display region in an upper-lower split-screen mode.

The apparatus may further include:
a third region determining module, configured to: when the first position is located on a left side of the upper display region or a left side of the lower display region, determine that the first position is located on the left side of the display interface; and
a fourth region determining module, configured to: when the first position is located on a right side of the upper display region or a right side of the lower display region, determine that the first position is located on the right side of the display interface.

According to a fourth aspect, an embodiment of this application provides an interaction apparatus, used in an electronic device. The apparatus may include:
a control display module, configured to display a first control on a display interface;
an operation detection module, configured to detect an interaction operation performed on the first control;
an operation determining module, configured to determine whether the interaction operation is performed by a left hand or a right hand;
a first window display module, configured to: when determining that the interaction operation is performed by the left hand, display a first window on a left side of the first control, where content displayed in the first window is content in response to the interaction operation; and
a second window display module, configured to: when determining that the interaction operation is performed by the right hand, display the first window on a right side of the first control.

Optionally, a length of the first control is less than a preset length.

In a possible implementation of the fourth aspect, the first window display module is specifically configured to display the first window at a first preset position on the left side of the first control.

For example, the first window display module is further configured to: when the first window is displayed at the first preset position, and a left edge of the first window exceeds a left edge of the display interface, update the first preset position to obtain a third preset position, and display the first window at the third preset position, so that the left edge of the first window does not exceed the left edge of the display interface.

Optionally, the first window display module is further configured to: when the first window is displayed at the third preset position, and the first window overlaps the first control, update the third preset position, and display the first window at an updated third preset position, so that the first window does not overlap the first control.

In another possible implementation of the fourth aspect, the second window display module is specifically configured to display the first window at a second preset position on the right side of the first control.

For example, the second window display module is further configured to: when the first window is displayed at the second preset position, and a right edge of the first window exceeds a right edge of the display interface, update the second preset position to obtain a fourth preset position, and display the first window at the fourth preset position, so that the right edge of the first window does not exceed the right edge of the display interface.

Optionally, the second window display module is further configured to: when the first window is displayed at the fourth preset position, and the first window overlaps the first control, update the fourth preset position, and display the first window at an updated fourth preset position, so that the first window does not overlap the first control.

In a possible implementation of the fourth aspect, the first window is a gradually expanding window.

The first window display module is further configured to: display the first window at the first preset position on the left side of the first control, and control the first window to gradually expand in a direction toward the left side of the first control.

In another possible implementation of the fourth aspect, the first window is a gradually expanding window.

The second window display module is further configured to: display the first window at the second preset position on the right side of the first control, and control the first window to gradually expand in a direction toward the right side of the first control.

According to a fifth aspect, an embodiment of this application provides an electronic device. The electronic device includes a memory, a processor, and a computer program that is stored in the memory and that is runnable on the processor. When the processor executes the computer program, the electronic device is enabled to implement the interaction method according to any one of the implementations of the first aspect, or implement the interaction method according to any one of the implementations of the second aspect.

According to a sixth aspect, an embodiment of this application provides a computer-readable storage medium. The computer-readable storage medium stores a computer program. When the computer program is executed by a computer, the computer is enabled to implement the interaction method according to any one of the implementations of the first aspect, or implement the interaction method according to any one of the implementations of the second aspect.

According to a seventh aspect, an embodiment of this application provides a computer program product. When the computer program product runs on an electronic device, the electronic device is enabled to perform the interaction method according to any one of the implementations of the first aspect, or perform the interaction method according to any one of the implementations of the second aspect.

It may be understood that, for beneficial effect of the third aspect to the seventh aspect, refer to related descriptions in the first aspect or the second aspect. Details are not described herein again.

### BRIEF DESCRIPTION OF DRAWINGS

FIG. 1 and FIG. 2(a) to FIG. 2(c) are diagrams of application scenarios of an interaction method;
FIG. 3 is a diagram of a structure of an electronic device to which an interaction method is applicable according to an embodiment of this application;
FIG. 4 is a diagram of a software architecture to which an interaction method is applicable according to an embodiment of this application;
FIG. 5 is a schematic flowchart of an interaction method according to Embodiment 1 of this application;
FIG. 6 and FIG. 7 are diagrams 1 of application scenarios according to Embodiment 1 of this application;
FIG. 8 and FIG. 9 are diagrams 2 of application scenarios according to Embodiment 1 of this application;
FIG. 10(a) to FIG. 10(d) are a diagram 3 of an application scenario according to Embodiment 1 of this application;
FIG. 11(a) to FIG. 11(d) are a diagram 4 of an application scenario according to Embodiment 1 of this application;
FIG. 12(a) to FIG. 12(e) are a diagram 5 of an application scenario according to Embodiment 1 of this application;
FIG. 13(a) to FIG. 13(d) and FIG. 14(a) to FIG. 14(f) are diagrams 6 of application scenarios according to Embodiment 1 of this application;
FIG. 15(a) to FIG. 15(h) are a diagram 7 of an application scenario according to Embodiment 1 of this application;
FIG. 16 is a schematic flowchart of an interaction method according to Embodiment 2 of this application;
FIG. 17(a) to FIG. 17(d) are a diagram 1 of an application scenario according to Embodiment 2 of this application;
FIG. 18(a) to FIG. 18(d) are a diagram 2 of an application scenario according to Embodiment 2 of this application; and
FIG. 19(a) to FIG. 19(d) are a diagram 3 of an application scenario according to Embodiment 2 of this application.

### DESCRIPTION OF EMBODIMENTS

It should be understood that the term "include"/"comprise" when used in the specification and the appended claims of this application indicates the presence of the described features, wholes, steps, operations, elements, and/or components, but does not preclude the presence or addition of one or more other features, wholes, steps, operations, elements, components, and/or collections thereof.

It should be further understood that the term "and/or" used in the specification and the appended claims of this application refers to any combination of one or more of associated items that are listed and all possible combinations, and includes these combinations.

As used in the specification and the appended claims of this application, the term "if" may be interpreted as "when" or "once" or "in response to determining" or "in response to detecting" depending on the context. Similarly, the phrase "if it is determined that" or "if [a described condition or event] is detected" may be interpreted as "once determined" or "in response to determining" or "once [a described condition or event] is detected" or "in response to detecting [a described condition or event]" depending on the context.

In addition, in descriptions of the specification and the appended claims of this application, the terms "first", "second", "third", and the like are merely intended for a purpose of differentiated description, but shall not be understood as indicating or implying relative importance.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variants thereof all mean "include but are not limited to", unless otherwise specifically emphasized in another manner.

In addition, "a plurality of" mentioned in embodiments of this application should be interpreted as two or more.

Steps in the interaction method provided in embodiments of this application are merely examples. Not all steps are mandatory, or not all content in each piece of information or each message is mandatory. A step or content may be added or reduced as required in a use process. A same step or steps or messages having a same function in embodiments of this application may be mutually referenced in different embodiments.

A service scenario described in embodiments of this application is intended to describe the technical solutions in embodiments of this application more clearly, and does not constitute a limitation on the technical solutions provided in embodiments of this application. Persons of ordinary skill in the art may learn that, with evolution of a network architecture and emergence of a new service scenario, the technical solutions provided in embodiments of this application are also applicable to similar technical problems.

An electronic device is usually provided with a touch display. A user may perform an interaction operation on the touch display, for example, touch a control displayed on a display interface to interact with the electronic device. When detecting the interaction operation performed on the touch display, the electronic device may display a corresponding window on the display interface in response to the interaction operation, to display, in the window, content in response to the interaction operation. The user may continue to operate content in the window for further interaction. However, in some cases, for example, in an electronic device with a large display, a window displayed by the electronic device on a display interface is inconvenient for the user to perform an operation, resulting in poor user experience.

It should be understood that the control may be a control that can trigger display of content in a window, for example, an input box, a search box, an application icon, a pop-up window, or a floating bubble. The content displayed in the window may be used by the user for further interaction. For example, the content displayed in the window may include a corresponding button. The user may touch the button in the window for further interaction.

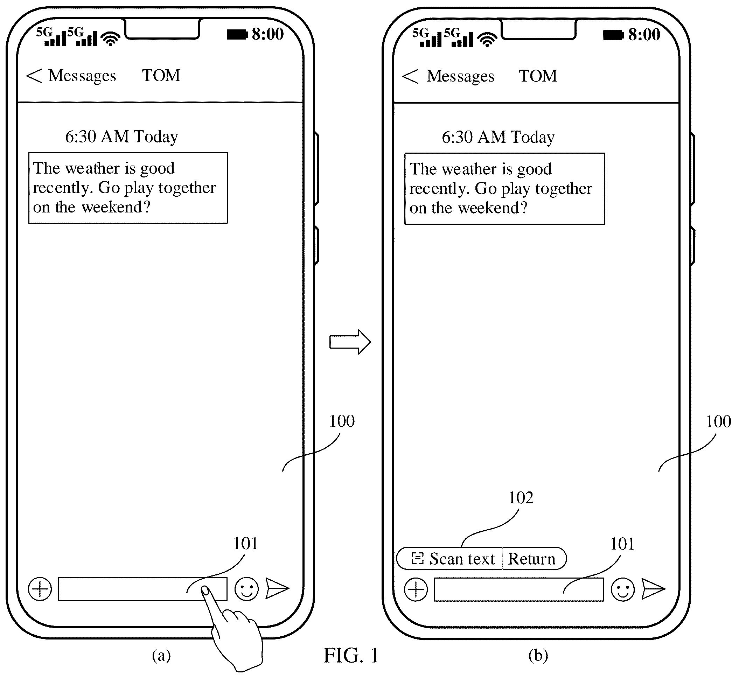

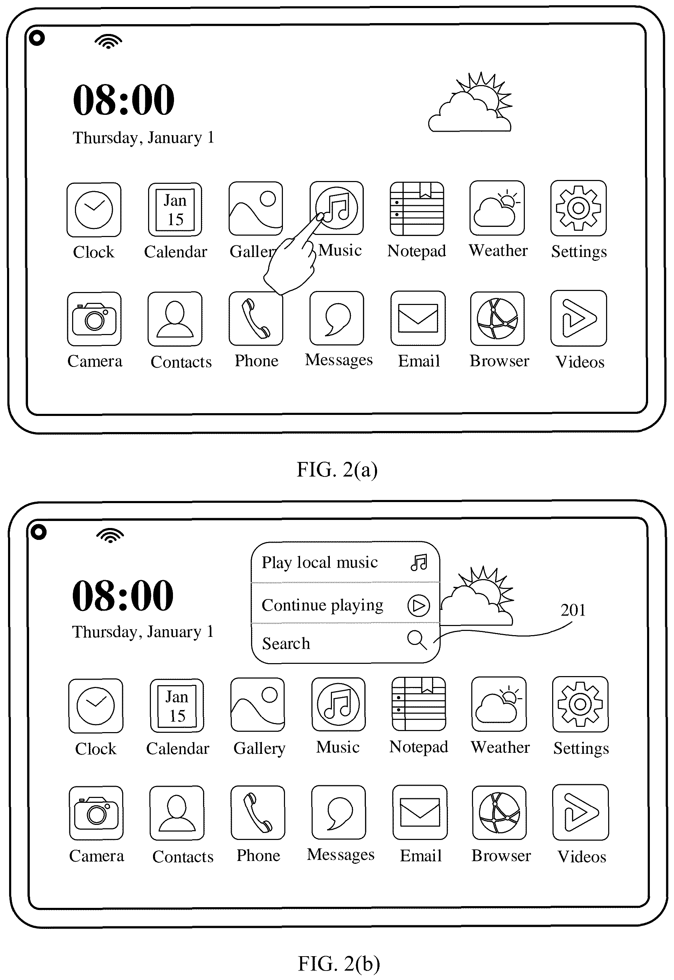

For example, FIG. 1 and FIG. 2(a) to FIG. 2(c) are diagrams of application scenarios of an interaction method.

As shown in (a) in FIG. 1, an electronic device may display an application interface 100 of an application (for example, a Messages application) on a display interface. The application interface 100 may include an input box 101, and may further include an SMS message "The weather is good recently. Go play together on the weekend?". As shown in (a) in FIG. 1, when a user touches and holds any position in the input box 101, the electronic device may display a window 102 above and to the left of the input box 101. As shown in FIG. 1 (b), a scan text button, a return button, and the like may be displayed in the window 102. When the user expects to input content in a text scanning manner, the user may tap the scan text button in the window 102.

In this manner of displaying the window above and to the left of the input box 101, it may be inconvenient for the user to operate content in the window. For example, when the user displays the window 102 by touching and holding a position on a right side of the input box 101, if the user expects to tap the scan text button in the window 102, the user needs to move a hand and jump a line of sight. To be specific, the user needs to move the hand to a position above and to the left of the input box 101, and needs to jump the line of sight to the position above and to the left of the input box 101, resulting in inconvenient operations and poor user experience. For an electronic device with a large display, such inconvenience is more obvious.

As shown in FIG. 2(a), an electronic device may display one or more controls on a display interface, such as icons of applications such as Clock, Calendar, Gallery, Notepad, Music, Weather, Settings, Camera, Contacts, Phone, Messages, Email, Browser, and Videos.

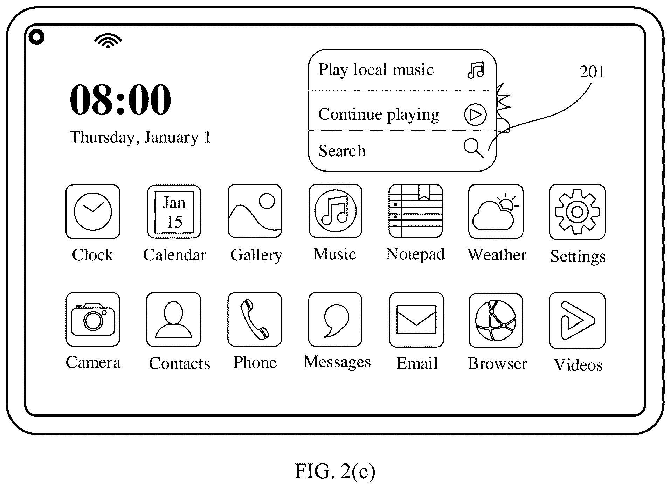

When a user touches and holds the icon of the Music application, as shown in FIG. 2(b), the electronic device may display a window 201 right above the icon of the Music application. Alternatively, as shown in FIG. 2(c), the electronic device may display a window 201 above and to the left of the icon of the Music application. A play local music button, a continue playing button, a search button, and the like may be displayed in the window 201. When the user expects to play local music, the user may tap the play local music button in the window 201. When the user expects to continue playing the music, the user may tap the continue playing button. When the user expects to search for a song, the user may tap the search button.

In this manner of displaying the window right above or above and to the left of the icon of the application, it may be inconvenient for the user to operate content in the window. For example, when the user expects to operate content in the window by using the left hand, the user may not reach the content that is in the window and that is located right above or above and to the left of an icon of an application. As a result, the user cannot operate the content by using the left hand, resulting in poor user experience. For an electronic device with a large display, such inconvenience is more obvious.

To resolve the foregoing problems, embodiments of this application provide an interaction method, an electronic device, and a computer-readable storage medium. In the method, the electronic device may display a first control on a display interface. When detecting an interaction operation performed on the first control, the electronic device may determine a first position of the interaction operation on the display interface. When the first position is located on a left side of the display interface, the electronic device displays a first window on the left side of the display interface; or when the first position is located on a right side of the display interface, the electronic device displays the first window on the right side of the display interface. Content displayed in the first window is content in response to the interaction operation. In other words, in embodiments of this application, when detecting the interaction operation performed on the first control, the electronic device may display the first window on the left or right side of the display interface based on the first position of the interaction operation on the display interface, so that the first window is located at a position that is on the display interface and that is convenient for a user to perform an operation. This helps the user perform the operation on the first window, thereby improving operation convenience and user experience and implementing high usability and practicability.

Alternatively, the electronic device may display a first control on a display interface. When detecting an interaction operation performed on the first control, the electronic device may determine a hand that performs the interaction operation. When the interaction operation is performed by a left hand of a user, the electronic device may display a first window on a left side of the first control. Alternatively, when the interaction operation is performed by a right hand of the user, the electronic device may display the first window on a right side of the first control. Content displayed in the first window is content in response to the interaction operation. In other words, in embodiments of this application, when detecting the interaction operation performed on the first control, the electronic device may display the first window on the left or right side of the first control based on the hand that is of the user and that performs the interaction operation, so that the first window is located at a position that is in the display interface and that is close to the hand of the user. This helps the user perform the operation on the first window, thereby improving operation convenience and user experience and implementing high usability and practicability.

In embodiments of this application, the electronic device may be an electronic device having a touch display, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a desktop computer. A specific type of the electronic device is not limited in embodiments of this application.

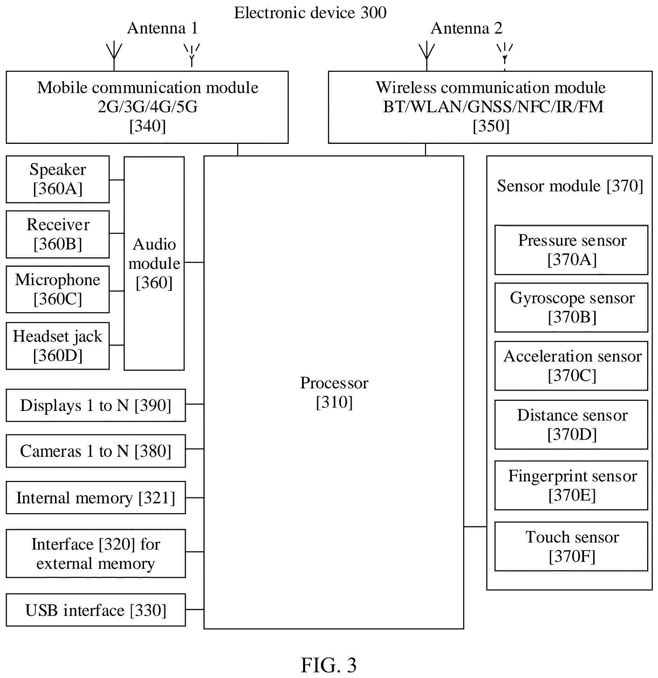

The following first describes the electronic device in embodiments of this application. FIG. 3 is a diagram of a structure of an electronic device 300.

The electronic device 300 may include a processor 310, an interface 320 for external memory, an internal memory 321, a universal serial bus (universal serial bus, USB) interface 330, an antenna 1, an antenna 2, a mobile communication module 340, a wireless communication module 350, an audio module 360, a speaker 360A, a receiver 360B, a microphone 360C, a headset jack 360D, a sensor module 370, a camera 380, a display 390, and the like. The sensor module 370 may include a pressure sensor 370A, a gyroscope sensor 370B, an acceleration sensor 370C, a distance sensor 370D, a fingerprint sensor 370E, a touch sensor 370F, and the like.

It may be understood that the structure shown in this embodiment of this application does not constitute a specific limitation on the electronic device 300. In some other embodiments of this application, the electronic device 300 may include more or fewer components than those shown in the figure, or a combination of some components, or splits from some components, or an arrangement of different components. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 310, and is configured to store instructions and data. In some embodiments, the memory in the processor 310 is a cache. The memory may store instructions or data that just used or cyclically used by the processor 310. If the processor 310 needs to use the instructions or the data again, the processor may directly invoke the instructions or the data from the memory. This avoids repeated access, and reduces waiting time of the processor 310, to improve system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 310 may include a plurality of groups of I2C buses. The processor 310 may be separately coupled to the touch sensor 370F, the camera 380, and the like through different I2C bus interfaces. For example, the processor 310 may be coupled to the touch sensor 370F through the I2C interface, so that the processor 310 communicates with the touch sensor 370F through the I2C bus interface, to implement a touch function of the electronic device 300.

The I2S interface may be configured to perform audio communication. In some embodiments, the processor 310 may include a plurality of groups of I2S buses. The processor 310 may be coupled to the audio module 360 through the I2S bus, to implement communication between the processor 310 and the audio module 360. In some embodiments, the audio module 360 may transmit an audio signal to the wireless communication module 350 through the I2S interface, to implement a function of answering a call through a Bluetooth headset.

The PCM interface may also be configured to perform audio communication, and sample, quantize, and code an analog signal. In some embodiments, the audio module 360 may be coupled to the wireless communication module 350 through a PCM bus interface. In some embodiments, the audio module 360 may alternatively transmit an audio signal to the wireless communication module 350 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 310 to the wireless communication module 350. For example, the processor 310 communicates with a Bluetooth module in the wireless communication module 350 through the UART interface, to implement a Bluetooth function. In some embodiments, the audio module 360 may transmit an audio signal to the wireless communication module 350 through the UART interface, to implement a function of playing music through a Bluetooth headset.

The MIPI interface may be configured to connect the processor 310 to a peripheral component like the display 390 or the camera 380. The MIPI interface includes a camera serial interface (camera serial interface, CSI), a display serial interface (display serial interface, DSI), and the like. In some embodiments, the processor 310 communicates with the camera 380 through the CSI interface, to implement a shooting function of the electronic device 300. The processor 310 communicates with the display 390 through the DSI interface, to implement a display function of the electronic device 300.

The GPIO interface may be configured by using software. The GPIO interface may be configured as a control signal or a data signal. In some embodiments, the GPIO interface may be configured to connect the processor 310 to the camera 380, the display 390, the wireless communication module 350, the audio module 360, the sensor module 370, and the like. The GPIO interface may alternatively be configured as an I2C interface, an I2S interface, a UART interface, an MIPI interface, or the like.

The USB interface 330 is an interface that conforms to a USB standard specification, and may be specifically a mini USB interface, a micro USB interface, a USB type-C interface, or the like. The USB interface 330 may be configured to perform data transmission between the electronic device 300 and a peripheral device, or may be configured to connect to a headset to play an audio through the headset. The interface may be further configured to connect to another electronic device, for example, an AR device.

It may be understood that an interface connection relationship between modules illustrated in embodiments of this application is merely an example for description, and does not constitute a limitation on the structure of the electronic device 300. In some other embodiments of this application, the electronic device 300 may alternatively use an interface connection manner different from that in the foregoing embodiment, or use a combination of a plurality of interface connection manners.

A wireless communication function of the electronic device 300 may be implemented through the antenna 1, the antenna 2, the mobile communication module 340, the wireless communication module 350, the modem processor, the baseband processor, and the like.

The antenna 1 and the antenna 2 are configured to transmit and receive electromagnetic wave signals. Each antenna in the electronic device 300 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 340 may provide a solution, applied to the electronic device 300, to wireless communication including 2G/3G/4G/5G or the like. The mobile communication module 340 may include at least one filter, a switch, a power amplifier, a low noise amplifier (low noise amplifier, LNA), and the like. The mobile communication module 340 may receive an electromagnetic wave through the antenna 1, perform processing such as filtering or amplification on the received electromagnetic wave, and transmit a processed electromagnetic wave to the modem processor for demodulation. The mobile communication module 340 may further amplify a signal modulated by the modem processor, and convert an amplified signal into an electromagnetic wave for radiation through the antenna 1. In some embodiments, at least some functional modules in the mobile communication module 340 may be disposed in the processor 310. In some embodiments, at least some function modules in the mobile communication module 340 may be disposed in a same component as at least some modules in the processor 310.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 360A, the receiver 360B, or the like), or displays an image or a video through the display 390. In some embodiments, the modem processor may be an independent component. In some other embodiments, the modem processor may be independent of the processor 310, and is disposed in a same component as the mobile communication module 340 or another functional module.

The wireless communication module 350 may provide a solution, applied to the electronic device 300, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 350 may be one or more components integrating at least one communication processing module. The wireless communication module 350 receives an electromagnetic wave through the antenna 2, performs frequency modulation and filter processing on the electromagnetic wave signal, and sends a processed signal to the processor 310. The wireless communication module 350 may further receive a to-be-sent signal from the processor 310, perform frequency modulation and amplification on the signal, and convert a processed signal into an electromagnetic wave for radiation through the antenna 2.

In some embodiments, in the electronic device 300, the antenna 1 and the mobile communication module 340 are coupled, and the antenna 2 and the wireless communication module 350 are coupled, so that the electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation system, SBAS).

The electronic device 300 may implement a display function through the GPU, the display 390, the application processor, and the like. The GPU is a microprocessor for image processing, and is connected to the display 390 and the application processor. The GPU is configured to: perform mathematical and geometric computation, and render an image. The processor 310 may include one or more GPUs that execute program instructions to generate or change display information.

The display 390 is configured to display an image, a video, and the like. The display 390 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 300 may include one or N displays 390, where N is a positive integer greater than 1.

The electronic device 300 may implement a shooting function through the ISP, the camera 380, the video codec, the GPU, the display 390, the application processor, and the like.

The ISP is configured to process data fed back by the camera 380. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and a skin tone of the image. The ISP may further optimize parameters such as exposure and a color temperature of a shooting scene. In some embodiments, the ISP may be disposed in the camera 380.

The camera 380 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 300 may include one or N cameras 380, where N is a positive integer greater than 1.

The digital signal processor is configured to process a digital signal, and may process another digital signal in addition to the digital image signal. For example, when the electronic device 300 selects a frequency, the digital signal processor is configured to perform Fourier transform on frequency energy.

The video codec is configured to compress or decompress a digital video. The electronic device 300 may support one or more video codecs. In this way, the electronic device 300 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, a transfer mode between human brain neurons, and may further continuously perform self-learning. Applications such as intelligent cognition of the electronic device 300 may be implemented through the NPU, for example, image recognition, facial recognition, voice recognition, and text understanding.

The interface 320 for external memory may be configured to connect to an external memory card, for example, a micro SD card, to extend a storage capability of the electronic device 300. The external memory card communicates with the processor 310 through the interface 320 for external memory, to implement a data storage function. For example, files such as music and videos are stored in the external memory card.

The internal memory 321 may be configured to store computer-executable program code, where the executable program code includes instructions. The internal memory 321 may include a program storage region and a data storage region. The program storage region may store an operating system, an application required by at least one function (for example, a sound playing function or an image playing function), and the like. The data storage region may store data (such as audio data and an address book) created during use of the electronic device 300, and the like. In addition, the internal memory 321 may include a high-speed random access memory, and may further include a nonvolatile memory, for example, at least one magnetic disk storage device, a flash memory, or a universal flash storage (universal flash storage, UFS). The processor 310 runs instructions stored in the internal memory 321 and/or instructions stored in the memory disposed in the processor, to perform various function applications and data processing of the electronic device 300.

The electronic device 300 may implement an audio function, for example, music playing or recording, through the audio module 360, the speaker 360A, the receiver 360B, the microphone 360C, the headset jack 360D, the application processor, and the like.

The audio module 360 is configured to convert digital audio information into an analog audio signal for an output, and is also configured to convert an analog audio input into a digital audio signal. The audio module 360 may be further configured to encode and decode an audio signal. In some embodiments, the audio module 360 may be disposed in the processor 310, or some functional modules in the audio module 360 are disposed in the processor 310.

The speaker 360A, also referred to as a "loudspeaker", is configured to convert an audio electrical signal into a sound signal. The electronic device 300 may be used to listen to music or answer a call in a hands-free mode through the speaker 360A.

The receiver 360B, also referred to as an "earpiece", is configured to convert an audio electrical signal into a sound signal. When a call is answered or voice information is received through the electronic device 300, the receiver 360B may be put close to a human ear to listen to a voice.

The microphone 360C, also referred to as a "mike" or a "mic", is configured to convert a sound signal into an electrical signal. When making a call or sending voice information, a user may make a sound near the microphone 360C through the mouth of the user, to input a sound signal to the microphone 360C. At least one microphone 360C may be disposed in the electronic device 300. In some other embodiments, two microphones 360C may be disposed in the electronic device 300, to collect a sound signal and implement a noise reduction function. In some other embodiments, three, four, or more microphones 360C may alternatively be disposed in the electronic device 300, to collect a sound signal, implement noise reduction, identify a sound source, implement a directional recording function, and the like.

The headset jack 360D is configured to connect to a wired headset. The headset jack 360D may be a USB interface 330, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 370A is configured to sense a pressure signal, and may convert the pressure signal into an electrical signal. In some embodiments, the pressure sensor 370A may be disposed on the display 390. There are a plurality of types of pressure sensors 370A, such as a resistive pressure sensor, an inductive pressure sensor, and a capacitive pressure sensor. The capacitive pressure sensor may include at least two parallel plates made of conductive materials. When a force is applied to the pressure sensor 370A, capacitance between electrodes changes. The electronic device 300 determines pressure intensity based on the change in the capacitance. When a touch operation is performed on the display 390, the electronic device 300 detects intensity of the touch operation through the pressure sensor 370A. The electronic device 300 may also calculate a touch position based on a detection signal of the pressure sensor 370A. In some embodiments, touch operations that are performed in a same touch position but have different touch operation intensity may correspond to different operation instructions. For example, when a touch operation whose touch operation intensity is less than a first pressure threshold is performed on an icon of a Messages application, an instruction for viewing an SMS message is executed. When a touch operation whose touch operation intensity is greater than or equal to a first pressure threshold is performed on an icon of a Messages application, an instruction for creating a new SMS message is executed.

The gyroscope sensor 370B may be configured to determine a moving posture of the electronic device 300. In some embodiments, an angular velocity of the electronic device 300 around three axes (namely, axes x, y, and z) may be determined through the gyroscope sensor 370B. The gyroscope sensor 370B may be configured to implement image stabilization during shooting. For example, when the shutter is pressed, the gyroscope sensor 370B detects an angle at which the electronic device 300 jitters, obtains, through calculation based on the angle, a distance for which a lens module needs to compensate, and allows the lens to cancel the jitter of the electronic device 300 through reverse motion, to implement image stabilization. The gyroscope sensor 370B may be further used in a navigation scenario and a motion-sensing game scenario.

The acceleration sensor 370C may detect accelerations in various directions (usually on three axes) of the electronic device 300. When the electronic device 300 is still, a magnitude and a direction of gravity may be detected. The acceleration sensor 370C may be further configured to identify a posture of the electronic device, and is used in an application like switching between a landscape mode and a portrait mode or a pedometer.

The distance sensor 370D is configured to measure a distance. The electronic device 300 may measure a distance in an infrared manner or a laser manner. In some embodiments, in a shooting scenario, the electronic device 300 may measure a distance through the distance sensor 370D to implement quick focusing.

The fingerprint sensor 370E is configured to collect a fingerprint. The electronic device 300 may use a feature of the collected fingerprint to implement fingerprint-based unlocking, application lock access, fingerprint-based photographing, fingerprint-based call answering, and the like.

The touch sensor 370F is also referred to as a "touch component". The touch sensor 370F may be disposed on the display 390, and the touch sensor 370F and the display 390 constitute a touchscreen, which is also referred to as a "touch screen". The touch sensor 370F is configured to detect a touch operation performed on or near the touch sensor 370F. The touch sensor may transfer the detected touch operation to the application processor to determine a type of the touch event. A visual output related to the touch operation may be provided through the display 390. In some other embodiments, the touch sensor 370F may alternatively be disposed on a surface of the electronic device 300, and is located at a position different from that of the display 390.

A software system of the electronic device 300 may use a layered architecture, an event-driven architecture, a microkernel architecture, a microservice architecture, or a cloud architecture. For example, the software system of the electronic device 300 may use an Android operating system (Operating System, OS), a Harmony operating system (Harmony OS), or an iOS of the layered architecture. In this embodiment of this application, an Android system of a layered architecture is used as an example to describe the software structure of the electronic device 300.

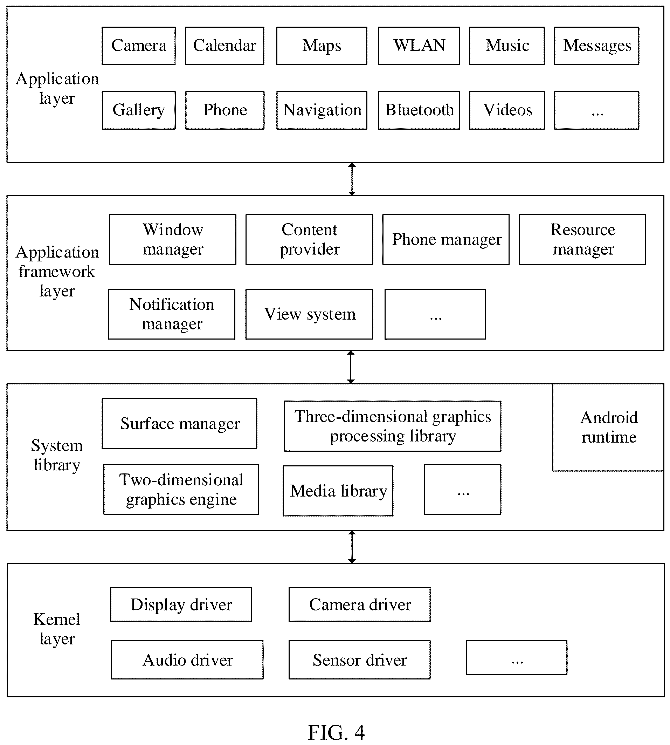

FIG. 4 is a block diagram of a software structure of the electronic device 300 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a Messages notification icon may include a view for displaying a text and a view for displaying an image.

The phone manager is configured to provide a communication function of the electronic device 300, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification message may automatically disappear after a short pause without user interaction. For example, the notification manager is configured to notify download completion, give a message notification, and the like. The notification manager may alternatively be a notification that appears in a top status bar of the system in a form of graph or scroll bar text, for example, a notification of an application that runs on a background, or may be a notification that appears on a screen in a form of dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of frequently used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

### [Embodiment 1]

The following describes in detail an interaction method according to Embodiment 1 of this application with reference to the accompanying drawings and specific application scenarios.

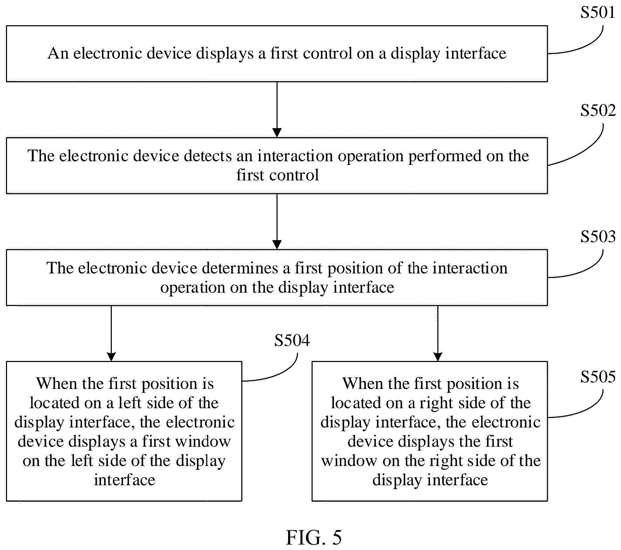

FIG. 5 is a schematic flowchart of an interaction method according to Embodiment 1 of this application. As shown in FIG. 5, the method may include the following steps.

S501: An electronic device displays a first control on a display interface.

S502: The electronic device detects an interaction operation performed on the first control.

S503: The electronic device determines a first position of the interaction operation on the display interface.

S504: When the first position is located on a left side of the display interface, the electronic device displays a first window on the left side of the display interface, where content displayed in the first window is content in response to the interaction operation.

S505: When the first position is located on a right side of the display interface, the electronic device displays the first window on the right side of the display interface.

In this embodiment, the electronic device may display the first control on the display interface, and when detecting the interaction operation performed on the first control, the electronic device may determine the first position of the interaction operation on the display interface. When the first position is a position on the left side of the display interface, the electronic device may display the first window on the left side of the display interface; or when the first position is a position on the right side of the display interface, the electronic device may display the first window on the right side of the display interface. The content displayed in the first window is the content in response to the interaction operation. In other words, when detecting the interaction operation performed on the first control, the electronic device may display the first window on the left or right side of the display interface based on the first position of the interaction operation on the display interface, so that the first window is located at a position that is on the display interface and that is convenient for a user to perform an operation. This helps the user continue to perform interaction based on the first window, thereby improving operation convenience and user experience.

For example, the first control may be a large control with a large operation region. The operation region is a region in which the user can perform an interaction operation on the first control to trigger display of a window. For example, the first control may be an input box, a search box, or the like with a large operation region.

In an example, the electronic device may determine, based on a width (which may also be referred to as a length) of the first control, whether the first control is the large control with the large operation region.

Optionally, when the width of the first control is greater than or equal to a preset width, the electronic device may determine that the first control is the large control with the large operation region. Alternatively, when the width of the first control is less than a preset width, the electronic device may determine that the first control is a small control with a small operation region.

It should be noted that the width of the first control may be a size of the first control in a horizontal direction. The width of the first control and the preset width may be represented by a quantity of pixels, or may be represented by a physical dimension. For example, the preset width may be 1920 pixels, and the width of the first control may be 1000 pixels. For example, the preset width may be 15 centimeters, and the width of the first control may be 10 centimeters.

Similarly, a height of the first control may be a size of the first control in a vertical direction. The height of the first control and the preset height may be represented by a quantity of pixels, or may be represented by a physical dimension. For example, the preset height may be 1080 pixels, and the height of the first control may be 300 pixels. For example, the preset height may be 10 centimeters, and the height of the first control may be 4 centimeters.

Optionally, the preset width may be determined based on a display mode of the electronic device and a width or a height of the electronic device. The width of the electronic device may be a width of a display in the electronic device when the electronic device is in a portrait mode, in other words, the width of the electronic device may be a size of the display in the horizontal direction when the electronic device is in the portrait mode. The height of the electronic device may be a height of the display in the electronic device when the electronic device is in the portrait mode, in other words, the height of the electronic device may be a size of the display in the vertical direction when the electronic device is in the portrait mode. Alternatively, the width of the electronic device may be a width of a display in the electronic device when the electronic device is in a landscape mode, in other words, the width of the electronic device may be a size of the display in the horizontal direction when the electronic device is in the landscape mode. The height of the electronic device may be a height of the display in the electronic device when the electronic device is in the landscape mode, in other words, the height of the electronic device may be a size of the display in the vertical direction when the electronic device is in the landscape mode.

The following provides descriptions by using an example in which the width of the electronic device is the width of the display in the electronic device when the electronic device is in the portrait mode, and the height of the electronic device is the height of the display in the electronic device when the electronic device is in the portrait mode.

For example, when the electronic device is in the portrait mode, the preset width may be determined based on the width of the electronic device (namely, the width of the display in the electronic device).

For example, when the electronic device is in the portrait mode, the preset width may be half of the width of the display. To be specific, when the width of the first control is greater than or equal to half of the width of the display, the electronic device may determine that the first control is the large control with the large operation region. Alternatively, when the width of the first control is less than half of the width of the display, the electronic device may determine that the first control is a small control with a small operation region.

For example, when the electronic device is in the landscape mode, the preset width may be determined based on the height of the electronic device (namely, the height of the display in the electronic device).

For example, when the electronic device is in the landscape mode, the preset width may be one third of the height of the display. To be specific, when the width of the first control is greater than or equal to one third of the height of the display, the electronic device may determine that the first control is the large control with the large operation region; or when the width of the first control is less than one third of the height of the display, the electronic device may determine that the first control is a small control with a small operation region.

It should be noted that that the preset width may be half of the width of the display in the electronic device, the preset height may be one third of the height of the display in the electronic device, and the like described above are merely examples for explanation, and shall not be construed as a limitation on this embodiment.

In another example, the electronic device may determine, based on a height of the first control, whether the first control is the large control with the large operation region.

Optionally, when the height of the first control is greater than or equal to a preset height, the electronic device may determine that the first control is the large control with the large operation region. Alternatively, when the height of the first control is less than a preset height, the electronic device may determine that the first control is a small control with a small operation region.

Optionally, the preset height may be determined based on a display mode of the electronic device and a height or a width of the electronic device.

For example, when the electronic device is in the portrait mode, the preset height may be determined based on the height of the electronic device (namely, the height of the display in the electronic device).

For example, when the electronic device is in the portrait mode, the preset height may be half of the height of the display. To be specific, when the height of the first control is greater than or equal to half of the height of the display, the electronic device may determine that the first control is the large control with the large operation region. Alternatively, when the height of the first control is less than half of the height of the display, the electronic device may determine that the first control is a small control with a small operation region.

For example, when the electronic device is in the landscape mode, the preset height may be determined based on the width of the electronic device (namely, the width of the display in the electronic device).

For example, when the electronic device is in the landscape mode, the preset height may be one third of the width of the display in the electronic device. To be specific, when the height of the first control is greater than or equal to one third of the width of the display, the electronic device may determine that the first control is the large control with the large operation region. Alternatively, when the height of the first control is less than one third of the width of the display, the electronic device may determine that the first control is a small control with a small operation region.

In this embodiment, when the first control is a large control whose width is greater than the preset width, the electronic device may determine the first position of the interaction operation on the display interface when detecting the interaction operation performed on the first control. When the first position of the interaction operation on the display interface is the position on the left side of the display interface, the electronic device may display the first window on the left side of the display interface. When the first position of the interaction operation on the display interface is the position on the right side of the display interface, the electronic device may display the first window on the right side of the display interface, so that the first window is displayed at a position convenient for the user to perform an operation. This helps the user perform the operation on the first window, thereby improving operation convenience and user experience.

It should be noted that when the first control is a large control whose height is greater than the preset height, the electronic device may determine the first position of the interaction operation on the display interface when detecting the interaction operation performed on the first control. When the first position of the interaction operation on the display interface is a position on an upper side of the display interface, the electronic device may display the first window on the upper side of the display interface. When the first position of the interaction operation on the display interface is a position on a lower side of the display interface, the electronic device may display the first window on the lower side of the display interface.

The following describes, by using an example in which the first control is a large control whose width is greater than the preset width, the interaction method provided in this embodiment. For specific content that the first control is a large control whose height is greater than the preset height, refer to the content that the first control is a large control whose width greater than the preset width.

It may be understood that the interaction operation may be any operation, like a touch and hold operation, a tap operation, a touch operation, or a slide operation, performed on the display interface. A specific type of the interaction operation is not limited in this embodiment, and may be specifically determined based on an actual scenario.

It should be noted that a specific representation manner of the first position of the interaction operation on the display interface is not limited in this embodiment, and may be determined based on an actual situation. For example, the first position of the interaction operation on the display interface may be represented by coordinates of a center point of an interaction region. For example, the first position of the interaction operation on the display interface may be represented by coordinates of a plurality of points (for example, three or four vertices) of the interaction region, or the like.

The interaction region may be a region in which the interaction operation is performed on the display interface. Alternatively, the interaction region may be a region in which the interaction operation is performed on the first control, that is, the interaction region may be a region that is in the region in which the interaction operation is performed on the display interface and that overlaps the first control.

Optionally, when the first position of the interaction operation on the display interface is represented by coordinates of a plurality of points of the interaction region, the electronic device may determine, based on positions of coordinates of most points on the display interface, the first position of the interaction operation on the display interface is located on the left side or the right side of the display interface.

For example, when the first position of the interaction operation on the display interface is represented by coordinates of three vertices of the interaction region, if coordinates of two or three vertices are located on the left side of the display interface, the electronic device may determine that the first position of the interaction operation on the display interface is located on the left side of the display interface; or if coordinates of two or three vertices are located on the right side of the display interface, the electronic device may determine that the first position of the interaction operation on the display interface is located on the right side of the display interface.

For example, when the first position of the interaction operation on the display interface is represented by coordinates of four vertices of the interaction region, if coordinates of three or four vertices are located on the left side of the display interface, the electronic device may determine that the first position of the interaction operation on the display interface is located on the left side of the display interface; or if coordinates of three or four vertices are located on the right side of the display interface, the electronic device may determine that the first position of the interaction operation on the display interface is located on the right side of the display interface; or if coordinates of two vertices are located on the left side of the display interface, and coordinates of two vertices are located on the right side of the display interface, the electronic device may determine that the first position of the interaction operation on the display interface is located on the left side of the display interface, or may determine that the first position of the interaction operation on the display interface is located on the right side of the display interface.

Optionally, when the first position of the interaction operation on the display interface is represented by coordinates of a plurality of points in the interaction region, the electronic device may determine, based on an area of a region that is on the left side of the display interface and that is of the interaction region (the area of the region that is on the left side of the display interface and that is of the interaction region is referred to as an area A below) and an area of a region that is on the right side of the display interface and that is of the interaction region (the area of the region that is on the right side of the display interface and that is of the interaction region is referred to as an area B below), that the first position of the interaction operation on the display interface is located on the left side or the right side of the display interface.

For example, when the first position of the interaction operation on the display interface is represented by coordinates of three or four vertices of the interaction region, if the area A is greater than the area B, the electronic device may determine that the first position of the interaction operation on the display interface is located on the left side of the display interface; or if the area A is less than the area B, the electronic device may determine that the first position of the interaction operation on the display interface is located on the right side of the display interface; or if the area A is equal to the area B, the electronic device may determine that the first position of the interaction operation on the display interface is located on the left side of the display interface, or may determine that the first position of the interaction operation on the display interface is located on the right side of the display interface.

Optionally, when the first position of the interaction operation on the display interface is represented by coordinates of a plurality of points of the interaction region, the electronic device may determine, based on positions of coordinates of most points on the display interface, the area A, and the area B, the first position of the interaction operation on the display interface is located on the left side or the right side of the display interface.

For example, when the first position of the interaction operation on the display interface is represented by coordinates of four vertices of the interaction region, coordinates of two vertices are located on the left side of the display interface, and coordinates of two vertices are located on the right side of the display interface, if the area A is greater than the area B, the electronic device may determine that the first position of the interaction operation on the display interface is located on the left side of the display interface; or if the area A is less than the area B, the electronic device may determine that the first position of the interaction operation on the display interface is located on the right side of the display interface; or if the area A is equal to the area B, the electronic device may determine that the first position of the interaction operation on the display interface is located on the left side or the right side of the display interface.

In a possible implementation, when the first position of the interaction operation on the display interface is the position on the left side of the display interface, the electronic device may display the first window at a preset position (referred to as a first preset position below) on the left side of the display interface; or when the first position of the interaction operation on the display interface is located on the right side of the display interface, the electronic device may display the first window at a preset position (referred to as a second preset position below) on the right side of the display interface.

Optionally, the first preset position and the second preset position may be set by the electronic device by default. It should be understood that the first preset position and the second preset position may be specifically determined based on an actual scenario. For example, the first preset position may be any position in a comfortable operation region (which may be referred to as a comfortable operation region A below) on the left side of the display interface, and the second preset position may be any position in a comfortable operation region (which may be referred to as a comfortable operation region B below) on the right side of the display interface. For example, the first preset position may be a position that is on the left side of the display interface and that is at a specific distance from a left edge of the display interface, and the second preset position may be a position that is on the right side of the display interface and that is at a specific distance from a right edge of the display interface.

It should be understood that the comfortable operation region is a region in which the user can conveniently perform an operation on the display interface. The comfortable operation region A and the comfortable operation region B may be determined in an existing determining manner. This is not limited in this embodiment. For example, the electronic device may determine the comfortable operation region A based on an operation status in a region on the left side of the display interface within preset duration. For example, the electronic device may determine the comfortable operation region B based on an operation status in a region on the right side of the display interface within preset duration.

For example, when the first window is displayed at the first preset position, the electronic device may determine, based on a size of the first window and the left edge of the display interface, whether a left edge of the first window exceeds the left edge of the display interface. When the left edge of the first window exceeds the left edge of the display interface, the electronic device may move the first window rightward, so that the first window can be completely displayed on the display interface. This improves display effect.

Similarly, when the first window is displayed at the second preset position, the electronic device may determine, based on the size of the first window and the right edge of the display interface, whether a right edge of the first window exceeds the right edge of the display interface. When the right edge of the first window exceeds the right edge of the display interface, the electronic device may move the first window leftward, so that the first window can be completely displayed on the display interface. This improves display effect.

In another possible implementation, when the first position of the interaction operation on the display interface is the position on the left side of the display interface, the electronic device may display the first window on the left side of the display interface based on a size of the first window and a left edge of the display interface; or when the first position of the interaction operation on the display interface is the position on the right side of the display interface, the electronic device may display the first window on the right side of the display interface based on the size of the first window and a right edge of the display interface. When the first window is displayed on the left side of the display interface, the left edge of the first window does not exceed the left edge of the display interface. For example, there may be a preset distance (referred to as a preset distance A below) between the left edge of the first window and the left edge of the display interface, to ensure good touch reachability of the first window, thereby facilitating a user operation. Alternatively, when the first window is displayed on the right side of the display interface, the right edge of the first window does not exceed the right edge of the display interface. For example, there may be a preset distance (referred to as a preset distance B below) between the right edge of the first window and the right edge of the display interface, to ensure good touch reachability of the first window, thereby facilitating a user operation.

In another possible implementation, when the first position of the interaction operation on the display interface is the position on the left side of the display interface, the electronic device may display the first window on the left side of the display interface based on the first position, a size of the first window, and a left edge of the electronic device, so that the first window is located on the left side of the display interface and close to a position at which the user performs the interaction operation. This ensures hand-following of the first window, reduces a line-of-sight jump of the user, and helps the user perform an operation on the first window. Alternatively, when the first position of the interaction operation on the display interface is the position on the right side of the display interface, the electronic device may display the first window on the right side of the display interface based on the first position, the size of the first window, and a right edge of the electronic device, so that the first window is located on the right side of the display interface and close to a position at which the user performs the interaction operation. This ensures hand-following of the first window, reduces a line-of-sight jump of the user, and helps the user perform an operation on the first window.

Optionally, after detecting the interaction operation performed on the first control, the electronic device may still display the first control on the display interface. In this case, to prevent the first window from blocking the first control, improve display effect of the interface, and improve user experience, when displaying the first window on the left or right side of the display interface, the electronic device may alternatively display the first window based on an upper edge or a lower edge of the first control.

In an example, when a distance between the lower edge of the first control and a lower edge of the display interface is less than a height of the first window, that is, when the first window cannot be completely displayed at the bottom of the first control, the first window may be located at the top of the first control and displayed from bottom to top. In other words, when the first control is close to the lower edge of the display interface, the electronic device may display the first window upward from the top of the first control.

Optionally, when the first window is displayed from bottom to top at the top of the first control, there may be a preset distance (referred to as a preset distance C below) between a lower edge of the first window and the upper edge of the first control, to ensure good touch reachability of the first window, thereby facilitating a user operation.

In another example, when a distance between the upper edge of the first control and an upper edge of the display interface is less than a height of the first window, that is, the first window cannot be completely displayed at the top of the first control, the first window may be located at the bottom of the first control and displayed from top to bottom. In other words, when the first control is close to the upper edge of the display interface, the electronic device may display the first window downward from the bottom of the first control.

Optionally, when the first window is displayed from top to bottom at the bottom of the first control, there may be a preset distance (referred to as a preset distance D below) between an upper edge of the first window and the lower edge of the first control, to ensure good touch reachability of the first window, thereby facilitating a user operation.

It should be understood that the preset distance A, the preset distance B, the preset distance C, and the preset distance D may be specifically determined based on an actual scenario. This is not limited in this embodiment.

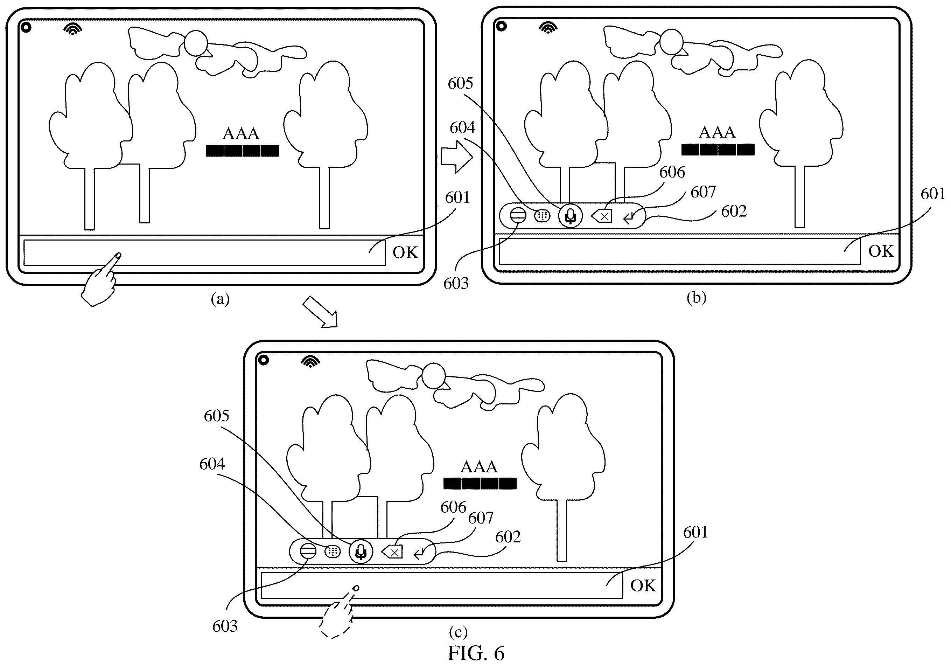

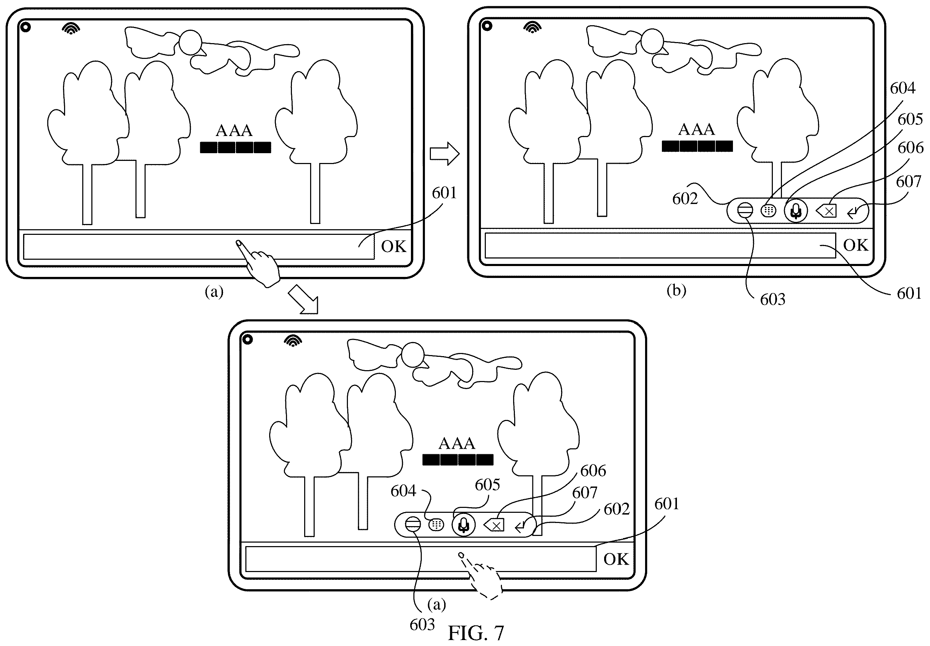

FIG. 6 and FIG. 7 are diagrams 1 of application scenarios according to Embodiment 1 of this application.

As shown in (a) in FIG. 6, an electronic device may display an application interface of an application (for example, a game application) on a display interface. The application interface may display an input box 601, and the input box 601 may be located at the bottom of the display interface. When a user taps the input box 601, the electronic device may display a first window 602 on the display interface. The first window 602 may include a text input button 603, a keyboard button 604, a voice input button 605, a deletion button 606, an enter button 607, and the like.

As shown in (a) in FIG. 6, when the user taps a position on a left side of the input box 601, the electronic device may determine that a first position of the tap operation on the display interface is located on a left side of the display interface. In this case, the electronic device may display the first window 602 on the left side of the display interface.

For example, as shown in (b) in FIG. 6, the electronic device may display the first window 602 from bottom to top on a left side above the top of the input box 601 based on a size of the first window 602 and a left edge of the display interface, in other words, display the first window 602 above and to the left of the input box 601. There may be a preset distance C between a lower edge of the first window 602 and an upper edge of the input box 601, and there may be a preset distance A between a left edge of the first window 602 and the left edge of the display interface.

Alternatively, as shown in (c) in FIG. 6, the electronic device may display, based on the first position, a size of the first window 602, and a left edge of the display interface, the first window 602 at a position that is above and to the left of the input box 601 and that is close to the first position. There may be a preset distance C between a lower edge of the first window 602 and an upper edge of the input box 601.

As shown in (a) in FIG. 7, when the user taps a position on a right side of the input box 601, the electronic device may determine that a first position of the tap operation on the display interface is located on a right side of the display interface. In this case, the electronic device may display the first window 602 on the right side of the display interface.

For example, as shown in (b) in FIG. 7, the electronic device may display the first window 602 from bottom to top on a right side above the top of the input box 601 based on a size of the first window 602 and a right edge of the display interface, in other words, display the first window 602 above and to the right of the input box 601. There may be a preset distance C between a lower edge of the first window 602 and an upper edge of the input box 601, and there may be a preset distance B between a right edge of the first window 602 and the right edge of the display interface.

Alternatively, as shown in (c) in FIG. 7, the electronic device may display, based on the first position, a size of the first window 602, and a right edge of the display interface, the first window 602 at a position that is above and to the right of the input box 601 and that is close to the first position. There may be a preset distance C between a lower edge of the first window 602 and an upper edge of the input box 601.

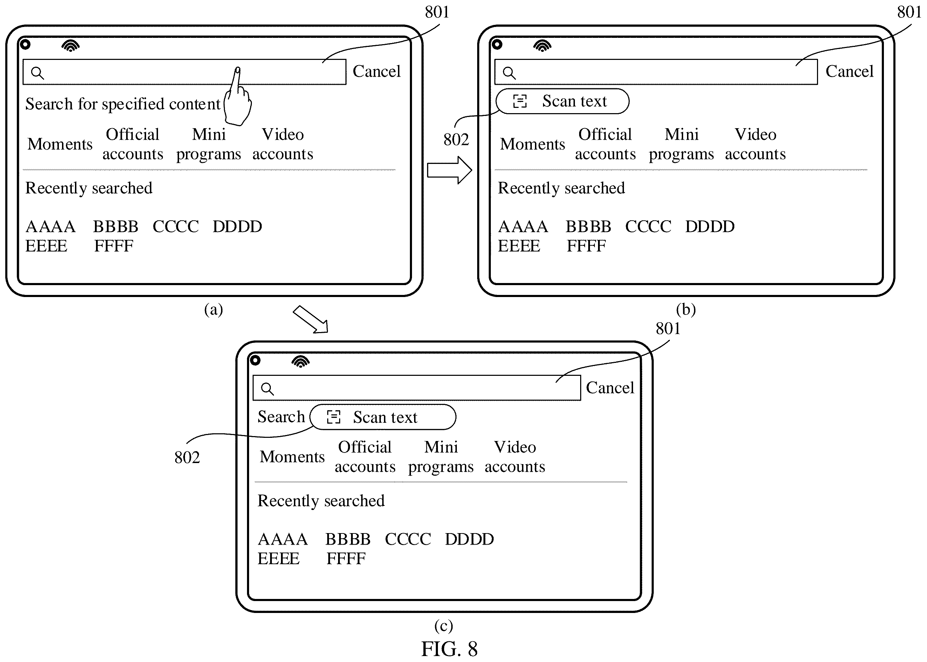

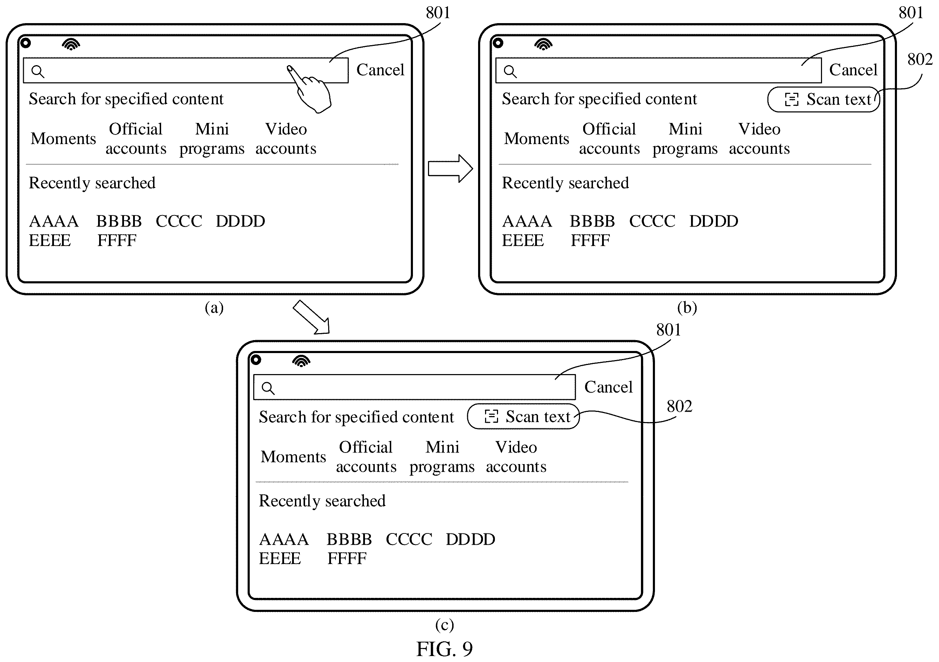

FIG. 8 and FIG. 9 are diagrams 2 of application scenarios according to Embodiment 1 of this application.

As shown in (a) in FIG. 8, an electronic device may display an application interface of an application (for example, a communication application) on a display interface. The application interface may include a search box 801, and the search box 801 may be located at the top of the display interface. When a user taps the search box 801, the electronic device may display a first window 802 on the display interface. The first window 802 may include a scan text button and the like. As shown in (a) in FIG. 8, the application interface may further display Search for specified content (such as Moments, Official accounts, Mini programs, and Video accounts), Recently searched (such as AAAA, BBBB, CCCC, DDDD, EEEE, and FFFF), and the like.

As shown in (a) in FIG. 8, when the user taps a position on a left side of the search box 801, the electronic device may determine that a first position of the tap operation on the display interface is located on a left side of the display interface. In this case, the electronic device may display the first window 802 on the left side of the display interface.

For example, as shown in (b) in FIG. 8, the electronic device may display the first window 802 from top to bottom on a left side below the bottom of the search box 801 based on a size of the first window 802 and a left edge of the display interface, in other words, may display the first window 802 below and to the left of the search box 801. There may be a preset distance D between an upper edge of the first window 802 and a lower edge of the search box 801, and there may be a preset distance A between a left edge of the first window 802 and the left edge of the display interface.

Alternatively, as shown in (c) in FIG. 8, the electronic device may display the first window 802 from top to bottom on a left side below the bottom of the search box 801 based on the first position, a size of the first window 802, and a left edge of the display interface, in other words, may display the first window 802 at a position that is below and to the left of the search box 801 and that is close to the first position. There may be a preset distance D between an upper edge of the first window 802 and a lower edge of the search box 801.

As shown in (a) in FIG. 9, when the user taps a position on a right side of the search box 801, the electronic device may determine that a first position of the tap operation on the display interface is located on a right side of the display interface. In this case, the electronic device may display the first window 802 on the right side of the display interface.

For example, as shown in (b) in FIG. 9, the electronic device may display the first window 802 from top to bottom on a right side below the bottom of the search box 801 based on a size of the first window 802 and a right edge of the display interface, in other words, may display the first window 802 below and to the right of the search box 801. There may be a preset distance D between a lower edge of the first window 802 and a lower edge of the search box 801, and there may be a preset distance B between a right edge of the first window 802 and the right edge of the display interface.

Alternatively, as shown in (c) in FIG. 9, the electronic device may display the first window 802 from top to bottom on a right side below the bottom of the search box 801 based on the first position, a size of the first window 802, and a right edge of the display interface, in other words, may display the first window 802 at a position that is below and to the right of the search box 801 and that is close to the first position. There may be a preset distance D between an upper edge of the first window 802 and a lower edge of the search box 801.

Optionally, after the interaction operation performed on the first control is detected, the first control may no longer be displayed on the display interface of the electronic device. In this case, the electronic device may display the first window on the left or right side of the display interface based on the first position of the interaction operation on the display interface.

For example, when the first position is located on the left side of the display interface, the electronic device may display the first window in the comfortable operation region A on the left side of the display interface based on the size of the first window and the left edge of the display interface; or the electronic device may display the first window in the comfortable operation region A on the left side of the display interface based on the first position, the size of the first window, and the left edge of the display interface, and the displayed first window is close to the first position, to reduce a line-of-sight jump of the user and help the user operate the first window.

Similarly, when the first position is located on the right side of the display interface, the electronic device may display the first window in the comfortable operation region B on the right side of the display interface based on the size of the first window and the right edge of the display interface; or the electronic device may display the first window in the comfortable operation region B on the right side of the display interface based on the first position, the size of the first window, and the right edge of the display interface, and the displayed first window is close to the first position, to reduce a line-of-sight jump of the user and help the user operate the first window.

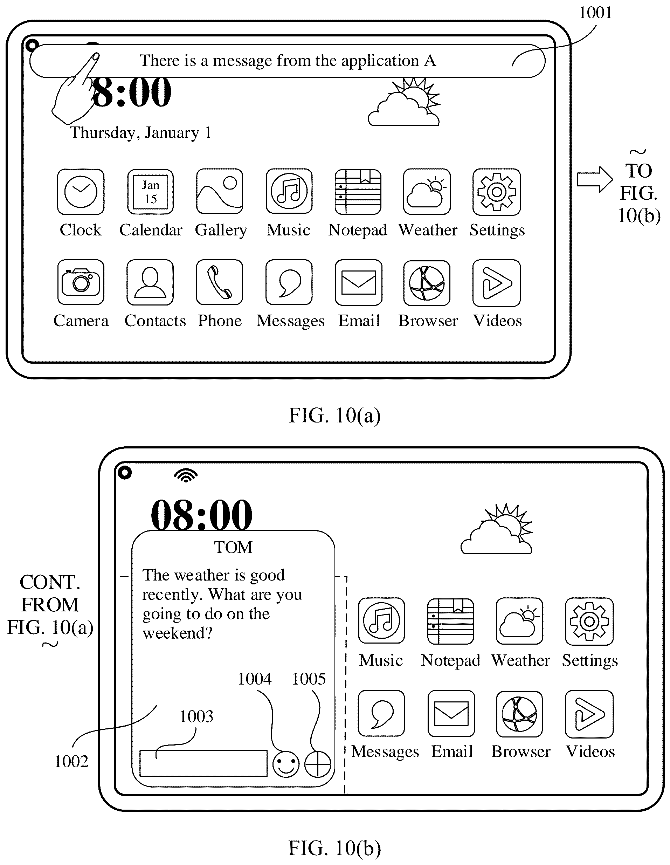

FIG. 10(a) to FIG. 10(d) are a diagram 3 of an application scenario according to Embodiment 1 of this application.

As shown in FIG. 10(a), an electronic device may display a home screen on a display interface. When an application (for example, an application A) receives a message, the electronic device may display a pop-up window 1001 on the top of the home screen. When a user taps the pop-up window 1001, the pop-up window 1001 may no longer be displayed on the display interface of the electronic device, and the electronic device may display a first window 1002 on the display interface. The first window 1002 may display text content (for example, "The weather is good recently. What are you going to do on the weekend?") from TOM, an input box 1003, an emoji selection button 1004, a more options button 1005, and the like.

As shown in FIG. 10(a), when the user taps a position on a left side of the pop-up window 1001, the electronic device may determine that a first position of the tap operation on the display interface is located on a left side of the display interface. In this case, as shown in FIG. 10(b), the electronic device may display the first window 1002 in a comfortable operation region A (namely, a region indicated by a dashed line in FIG. 10(b)) on the left side of the display interface based on the first position, a size of the first window 1002, and a left edge of the display interface. The displayed first window 1002 is close to the first position, and there is a preset distance A between a left edge of the first window 1002 and the left edge of the display interface. In addition, the pop-up window 1001 may no longer be displayed on the display interface of the electronic device.

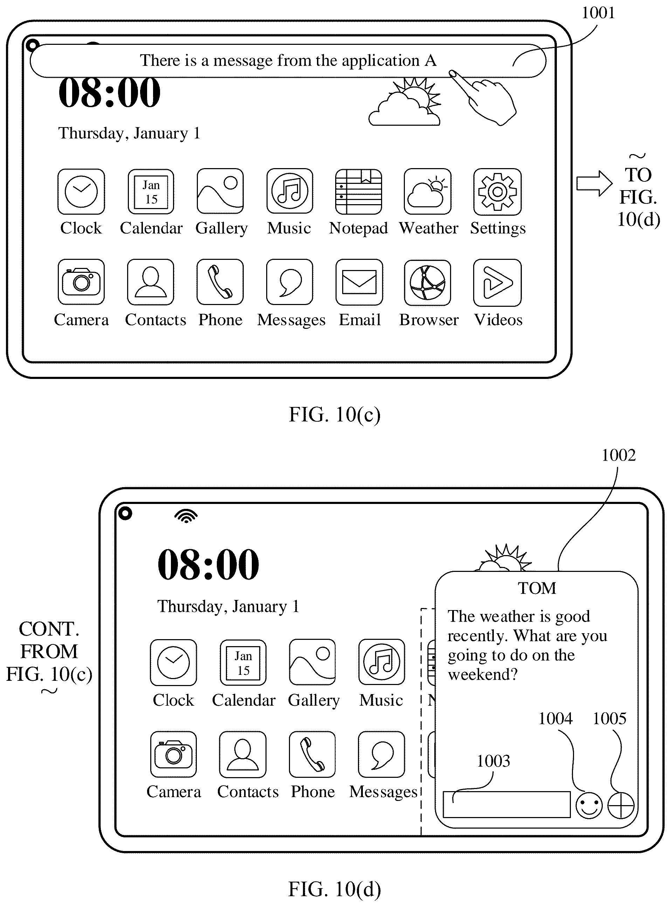

As shown in FIG. 10(c), when the user taps a position on a right side of the pop-up window 1001, the electronic device may determine that a first position of the tap operation on the display interface is located on a right side of the display interface. In this case, as shown in FIG. 10(d), the electronic device may display the first window 1002 in a comfortable operation region B (namely, a region indicated by a dashed line in FIG. 10(d)) on the right side of the display interface based on the first position, a size of the first window 1002, and a right edge of the display interface. The displayed first window 1002 is close to the first position, and there is a preset distance B between a right edge of the first window 1002 and the right edge of the display interface. In addition, the pop-up window 1001 may no longer be displayed on the display interface of the electronic device.

In a possible implementation, the display interface may include a left display region and a right display region in a left-right split-screen mode. A first control A corresponding to an application A may be displayed in the left display region, and a first control B corresponding to an application B may be displayed in the right display region.

When the user performs the interaction operation on the first control A, for example, performs the interaction operation at any position of the first control A, the electronic device may determine that the first position of the interaction operation on the display interface is a position on the left side of the display interface. In this case, the electronic device may display the first window on the left side of the display interface.

When the user performs the interaction operation on the first control B, for example, performs the interaction operation at any position of the first control B, the electronic device may determine that the first position of the interaction operation on the display interface is a position on the right side of the display interface. In this case, the electronic device displays the first window on the right side of the display interface.

It should be noted that for specific content of displaying the first window on the left or right side of the display interface by the electronic device in a left-right split-screen scenario, refer to the foregoing content of displaying the first window on the left or right side of the display interface. For brevity, details are not described herein again.

For example, the left display region may further include a first left display region and a second left display region in an upper-lower split-screen mode. The first control A corresponding to the application A may be displayed in the first left display region, and a first control C corresponding to an application C may be displayed in the second left display region.

When the user performs the interaction operation on the first control A, the electronic device may determine that the first position of the interaction operation on the display interface is a position on the left side of the display interface. In this case, the electronic device may display, on the left side of the display interface, a first window A corresponding to the first control A. When the user performs the interaction operation on the first control C, the electronic device may also determine that the first position of the interaction operation on the display interface is a position on the left side of the display interface. In this case, the electronic device may display, on the left side of the display interface, a first window C corresponding to the first control C.

In an example, the electronic device may display the first window A and the first window C in a same display region. For example, the first window A and the first window C may be displayed in the first left display region, or the first window A and the first window C may be displayed in the second left display region. To be specific, when the user performs the interaction operation on the first control A, the electronic device may display the first window A in the first left display region, and when the user performs the interaction operation on the first control C, the electronic device may also display the first window C in the first left display region; or when the user performs the interaction operation on the first control A, the electronic device may display the first window A in the second left display region, and when the user performs the interaction operation on the first control C, the electronic device may also display the first window C in the second left display region.

In another example, the electronic device may display the first window A and the first window C in different display regions. For example, the electronic device may display the first window A in the first left display region, and display the first window C in the second left display region.

It may be understood that for specific content of displaying the first window in the first left display region or displaying the first window in the second left display region by the electronic device, refer to the foregoing content of displaying the first window on the left side of the display interface. For brevity, details are not described herein again.

For example, the electronic device may display the first window at a preset position of the first left display region or a preset position of the second left display region. For example, the electronic device may display the first window in the first left display region or the second left display region based on a size of the first window, a left edge of the display interface, and a size of the first control A or the first control C. For example, the electronic device may display the first window in the first left display region or the second left display region based on the first position, a size of the first window, a left edge of the display interface, and a size of the first control A or the first control C.

Similarly, the right display region may include a first right display region and a second right display region in an upper-lower split-screen mode. The first control B corresponding to the application B may be displayed in the first right display region, and a first control D corresponding to an application D may be displayed in the second right display region.

When the user performs the interaction operation on the first control B or the first control D, the electronic device may determine that the first position of the interaction operation on the display interface is a position on the right side of the display interface. In this case, the electronic device may display the first window on the right side of the display interface. To be specific, the first window B corresponding to the first control B or the first window D corresponding to the first control D is displayed on the right side of the display interface.

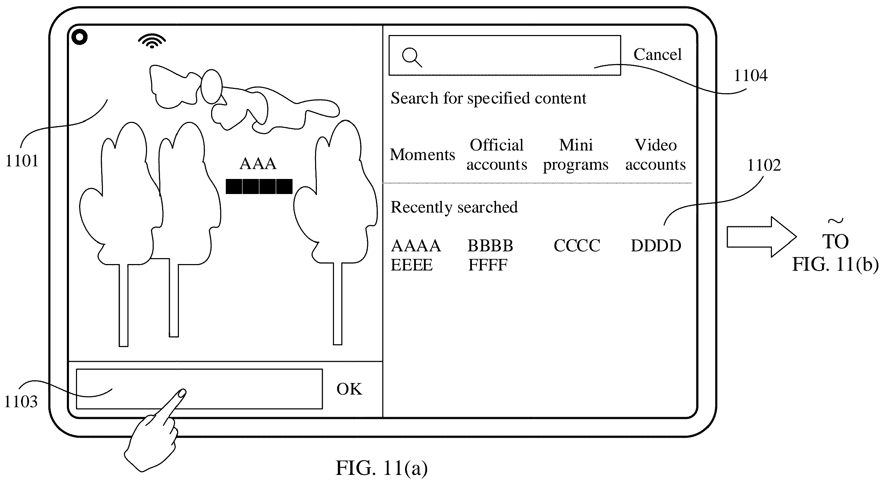

FIG. 11(a) to FIG. 11(d) are a diagram 4 of an application scenario according to an embodiment of this application.

As shown in FIG. 11(a), a display interface of an electronic device may include a left display region 1101 and a right display region 1102 in a left-right split-screen mode. An application interface A of an application A (for example, a game application) may be displayed in the left display region 1101, and an application interface B of an application B (for example, a communication application) may be displayed in the right display region 1102.

As shown in FIG. 11(a), an input box 1103 may be displayed in the left display region 1101, and the input box 1103 may be located at the bottom of the display interface. When a user taps the input box 1103, the electronic device may display a first window 1105 on the display interface. The first window 1105 may include a text input button, a keyboard button, a voice input button, a deletion button, an enter button, and the like.

As shown in FIG. 11(a), a search box 1104 may be displayed in the right display region 1102, and the search box 1104 may be located at the top of the display interface. When the user taps the search box 1104, the electronic device may display a first window 1106 on the display interface. The first window 1106 may include a scan text button and the like.

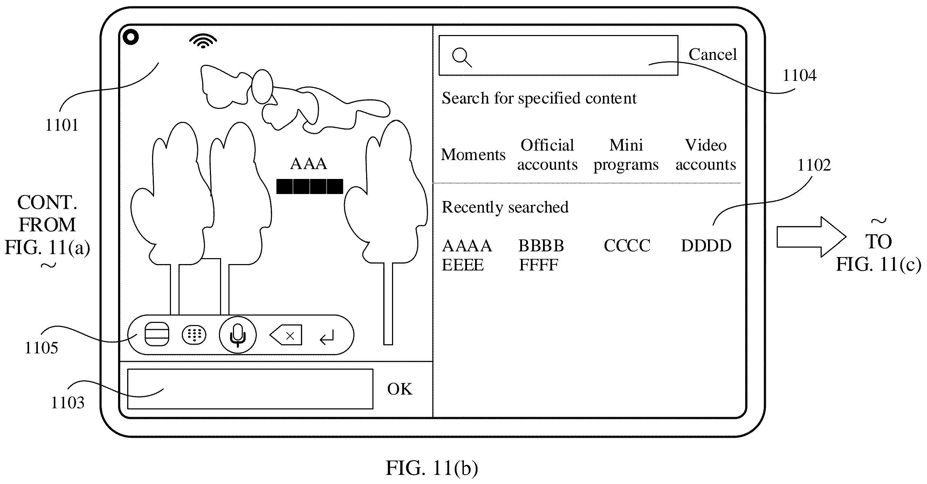

As shown in FIG. 11(a), when the user taps any position in the input box 1103, the electronic device may determine that a first position of the tap operation on the display interface is located on a left side of the display interface. In this case, the electronic device may display the first window 1105 on the left side of the display interface. For example, as shown in FIG. 11(b), the electronic device may display the first window 1105 above and to the left of the input box 1103 based on a size of the first window 1105 and a left edge of the display interface. There may be a preset distance C between a lower edge of the first window 1105 and an upper edge of the input box 1103, and there may be a preset distance A between a left edge of the first window 1105 and the left edge of the display interface.

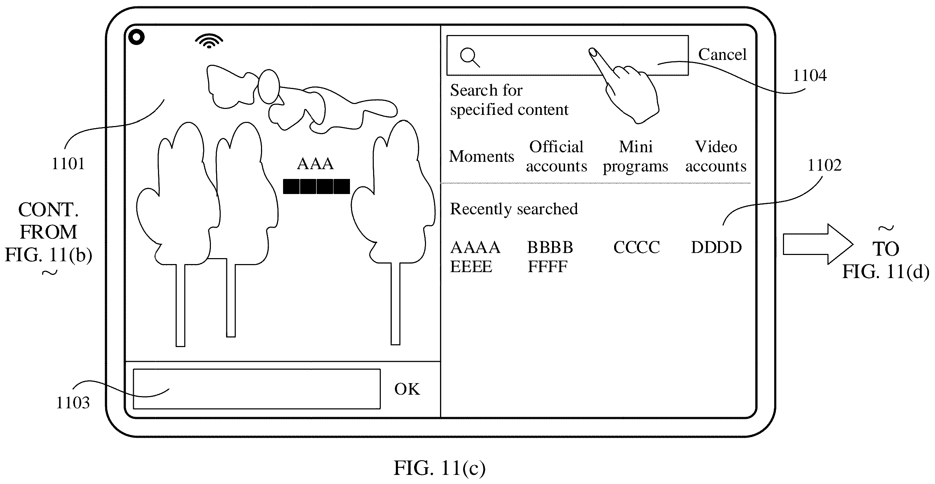

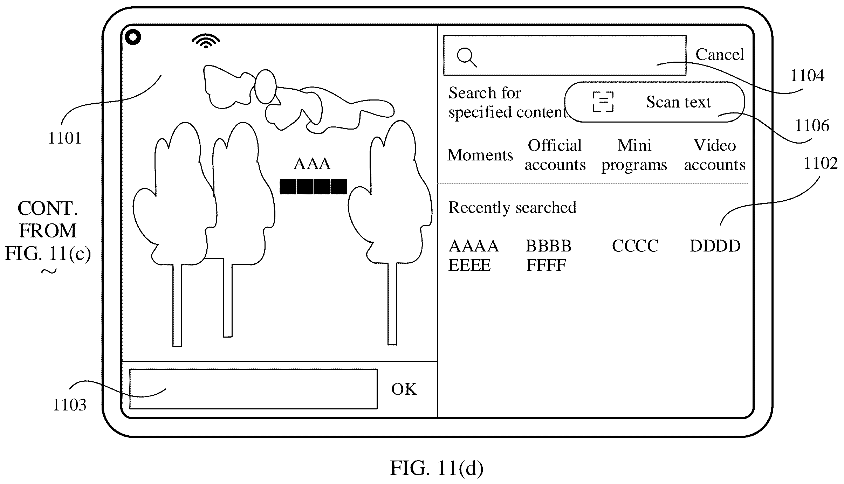

As shown in FIG. 11(c), when the user taps any position in the search box 1104, the electronic device may determine that a first position of the tap operation on the display interface is located on a right side of the display interface. In this case, the electronic device may display the first window 1106 on the right side of the display interface. For example, as shown in FIG. 11(d), the electronic device may display the first window 1106 below and to the right of the search box 1104 based on a size of the first window 1106 and a right edge of the display interface. There may be a preset distance D between an upper edge of the first window 1106 and a lower edge of the search box 1104, and there may be a preset distance B between a right edge of the first window 1106 and the right edge of the display interface.

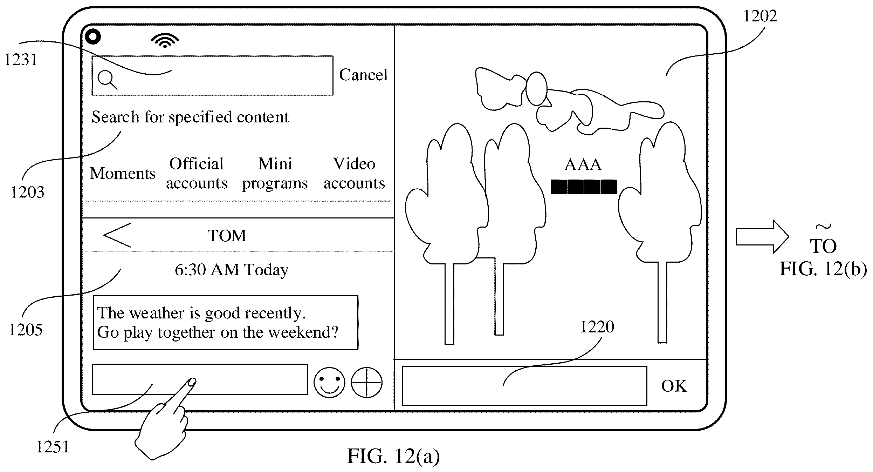

FIG. 12(a) to FIG. 12(e) are a diagram 5 of an application scenario according to an embodiment of this application.

As shown in FIG. 12(a), a display interface of an electronic device may include a left display region and a right display region 1202 in a left-right split-screen mode, and the left display region may include a first left display region 1203 and a second left display region 1205 in an upper-lower split-screen mode. An application interface B of an application B (for example, a communication application) may be displayed in the first left display region 1203, an application interface C corresponding to an application C (for example, a Messages application) may be displayed in the second left display region 1205, and an application interface A of an application A (for example, a game application) may be displayed in the right display region 1202.

As shown in FIG. 12(a), a search box 1231 may be displayed in the first left display region 1203, and the search box 1231 may be located at the top of the first left display region 1203. An input box 1251 may be displayed in the second left display region 1205, and the input box 1251 may be located at the bottom of the second left display region 1205. When a user taps the search box 1231, the electronic device may display a first window 1233 on the display interface. The first window 1233 may include a scan text button and the like. When the user taps the input box 1251, the electronic device may display a first window 1253 on the display interface. The first window 1253 may also include a scan text button, a return button, and the like. An input box 1220 may be displayed in the right display region 1202, and the input box 1220 may be located at the bottom of the right display region 1202. When the user taps the input box 1220, the electronic device may display, on the display interface, a first window A corresponding to the application interface A. The first window A may include a text input button, a keyboard button, a voice input button, a deletion button, an enter button, and the like.

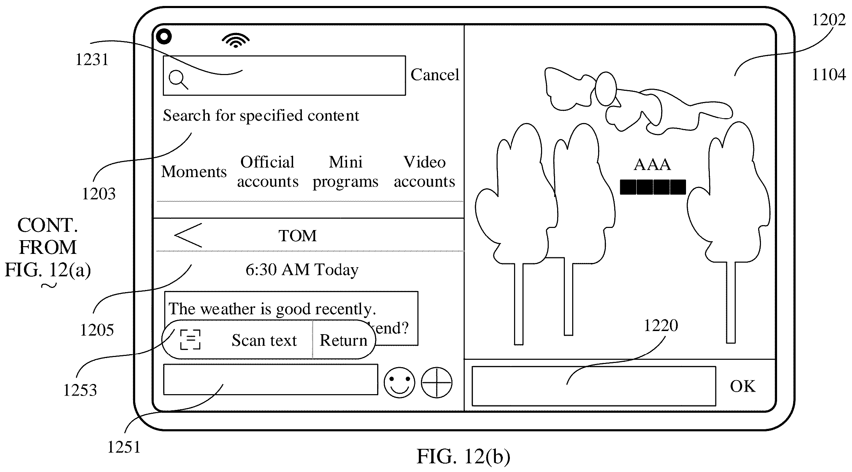

As shown in FIG. 12(a), when the user taps any position in the input box 1251, the electronic device may determine that a first position of the tap operation on the display interface is located on a left side of the display interface. In this case, the electronic device may display the first window 1253 on the left side of the display interface. For example, as shown in FIG. 12(b), the electronic device may display the first window 1253 above and to the left of the input box 1251 based on a size of the first window 1253 and a left edge of the display interface. There may be a preset distance C between a lower edge of the first window 1253 and an upper edge of the input box 1251, and there may be a preset distance A between a left edge of the first window 1253 and the left edge of the display interface.

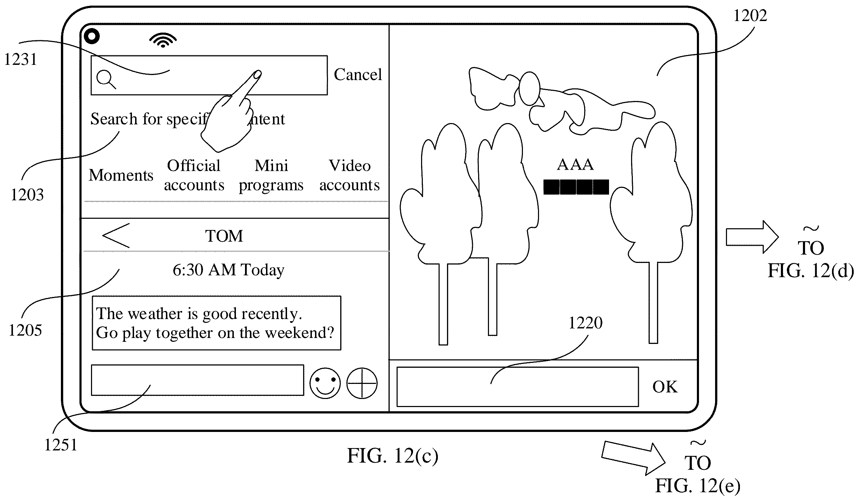

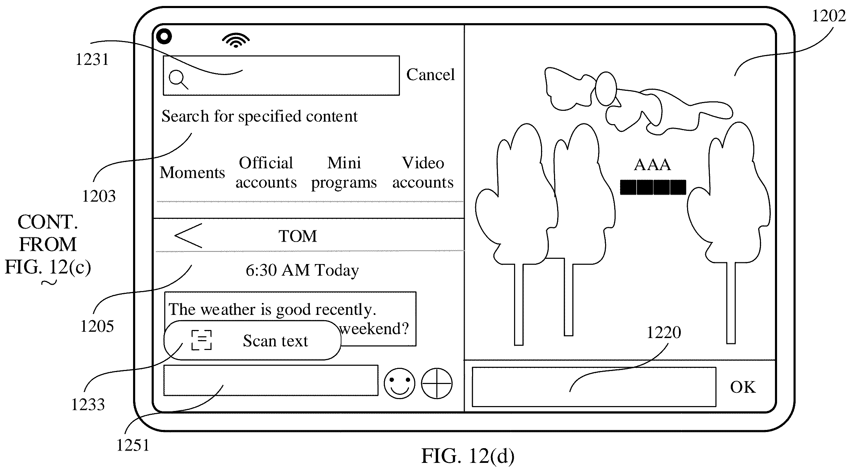

As shown in FIG. 12(c), when the user taps any position in the search box 1231, the electronic device may determine that a first position of the tap operation on the display interface is located on a left side of the display interface. In this case, the electronic device may display the first window 1233 on the left side of the display interface. For example, as shown in FIG. 12(d), the electronic device may display the first window 1233 above and to the left of the input box 1251 based on a size of the first window 1233 and a left edge of the display interface. There may be a preset distance C between a lower edge of the first window 1233 and an upper edge of the input box 1251, and there may be a preset distance A between a left edge of the first window 1233 and the left edge of the display interface.

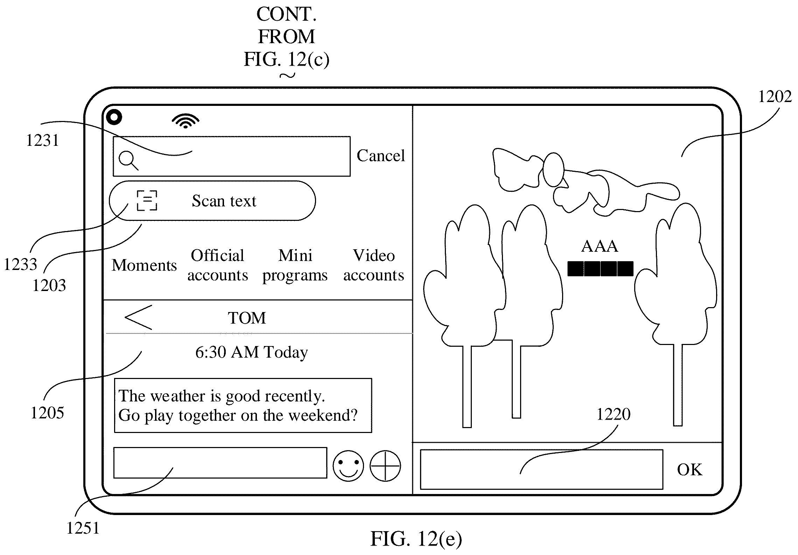

Alternatively, as shown in FIG. 12(e), the electronic device may display the first window 1233 below and to the left of the search box 1231 based on a size of the first window 1233 and a left edge of the display interface. There may be a preset distance D between an upper edge of the first window 1233 and a lower edge of the search box 1231, and there may be a preset distance A between a left edge of the first window 1233 and the left edge of the display interface.

In another possible implementation, the display interface may include an upper display region and a lower display region in an upper-lower split-screen mode. A first control A corresponding to an application A may be displayed in the upper display region, and a first control B corresponding to an application B may be displayed in the lower display region.

When the user performs an interaction operation on the first control A or the first control B, the electronic device may determine a first position of the interaction operation on the display interface. When the first position is a position on a left side of the display interface, the electronic device may display the first window (namely, a first window A corresponding to the first control A or a first window B corresponding to the first control B) on the left side of the display interface. Alternatively, when the first position is a position on a right side of the display interface, the electronic device may display the first window (namely, a first window A corresponding to the first control A or a first window B corresponding to the first control B) on the right side of the display interface.

In an example, the electronic device may display the first window A and the first window B in a same region. For example, the first window A and the first window B may be displayed in the upper display region, or the first window A and the first window B may be displayed in the lower display region. To be specific, when the user performs the interaction operation on the first control A, the electronic device may display the first window A on a left or right side of the upper display region, and when the user performs the interaction operation on the first control B, the electronic device may also display the first window B on the left or right side of the upper display region; or
when the user performs the interaction operation on the first control A, the electronic device may display the first window A on a left or right side of the lower display region, and when the user performs the interaction operation on the first control C, the electronic device may also display the first window B on the left or right side of the lower display region.

In another example, the electronic device may display the first window A and the first window B in different regions. For example, the electronic device may display the first window A on a left or right side of the upper display region, and display the first window B on a left or right side of the lower display region.

It should be noted that for specific content of displaying the first window on the left or right side of the display interface by the electronic device in an upper-lower split-screen scenario, refer to the foregoing content of displaying the first window on the left or right side of the display interface. For brevity, details are not described herein again.

For example, the upper display region may further include a first upper display region and a second upper display region in a left-right split-screen mode. The first control A corresponding to the application A may be displayed in the first upper display region, and a first control C corresponding to an application C may be displayed in the second upper display region.

When the user performs the interaction operation on the first control A, the electronic device may determine that a position of the interaction operation on the display interface is located on a left side of the display interface. In this case, the electronic device may display the first window on the left side of the display interface. When the user performs the interaction operation on the first control C, the electronic device may determine that a position of the interaction operation on the display interface is located on a right side of the display interface. In this case, the electronic device may display the first window on the right side of the display interface.

Similarly, the lower display region may further include a first lower display region and a second lower display region in a left-right split-screen mode. The first control B corresponding to the application B may be displayed in the first lower display region, and a first control D corresponding to an application D may be displayed in the second lower display region.

When the user performs the interaction operation on the first control B, the electronic device may determine that a position of the interaction operation on the display interface is located on a left side of the display interface. In this case, the electronic device may display the first window on the left side of the display interface. When the user performs the interaction operation on the first control D, the electronic device may determine that a position of the interaction operation on the display interface is located on a right side of the display interface. In this case, the electronic device may display the first window on the right side of the display interface.

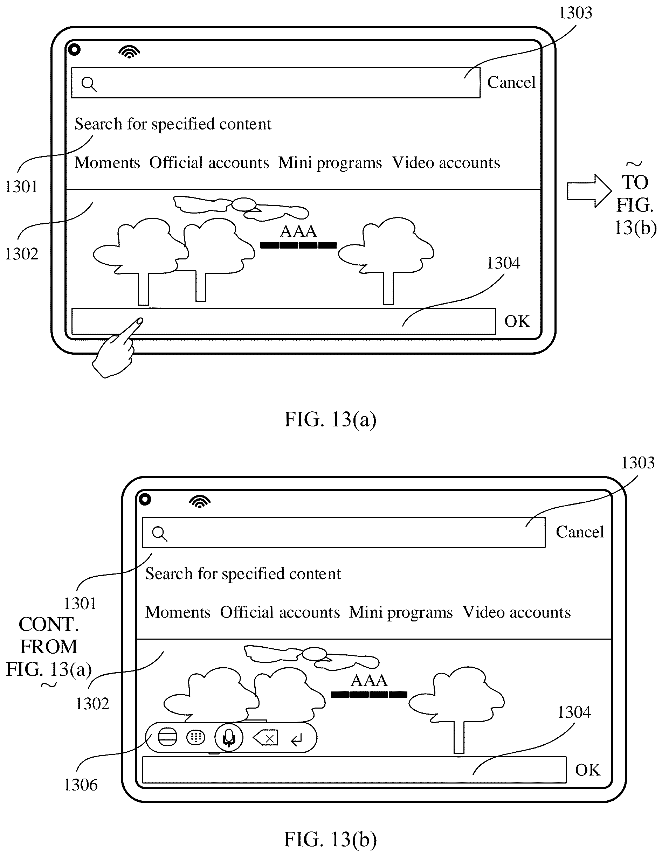

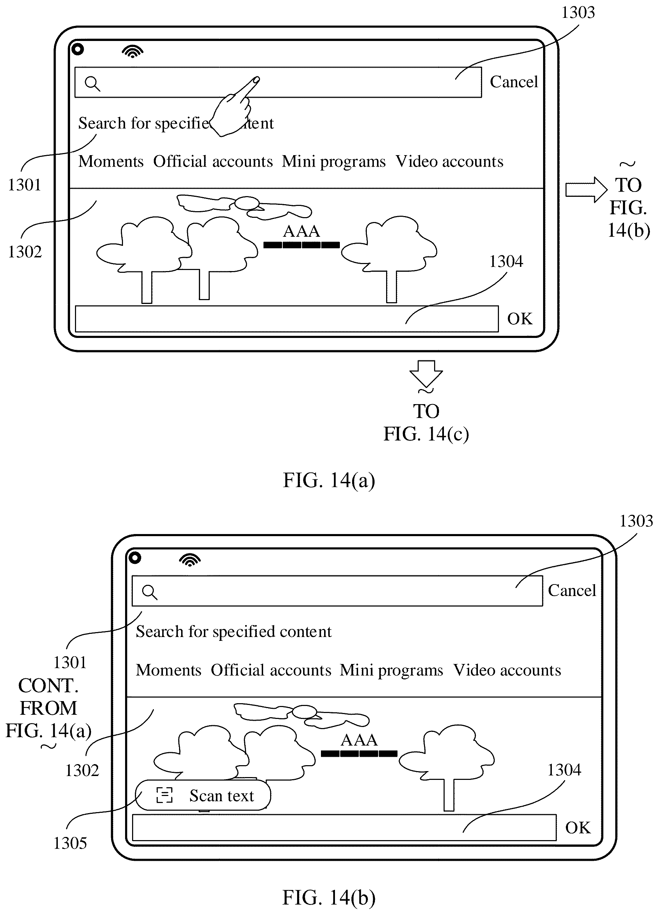

FIG. 13(a) to FIG. 13(d) and FIG. 14(a) to FIG. 14(f) are diagrams 6 of application scenarios according to an embodiment of this application.

As shown in FIG. 13(a), a display interface of an electronic device may include an upper display region 1301 and a lower display region 1302 in an upper-lower split-screen mode. An application interface B of an application B (for example, a communication application) may be displayed in the upper display region 1301, and an application interface A of an application A (for example, a game application) may be displayed in the lower display region 1302.

As shown in FIG. 13(a), a search box 1303 may be displayed in the upper display region 1301, and the search box 1303 may be located at the top of the display interface. When a user taps the search box 1303, the electronic device may display a first window 1305 on the display interface. The first window 1305 may include a scan text button and the like. An input box 1304 may be displayed in the lower display region 1302, and the input box 1304 may be located at the bottom of the display interface. When the user taps the input box 1304, the electronic device may display a first window 1306 on the display interface. The first window 1306 may include a text input button, a keyboard button, a voice input button, a deletion button, an enter button, and the like.

As shown in FIG. 13(a), when the user taps a position on a left side of the input box 1304, the electronic device may determine that a first position of the tap operation on the display interface is located on a left side of the display interface. In this case, the electronic device may display the first window 1306 on the left side of the display interface. For example, as shown in FIG. 13(b), the electronic device may display the first window 1306 above and to the left of the input box 1304 based on a size of the first window 1306 and a left edge of the display interface. There may be a preset distance C between a lower edge of the first window 1306 and an upper edge of the input box 1304, and there may be a preset distance A between a left edge of the first window 1306 and the left edge of the display interface.

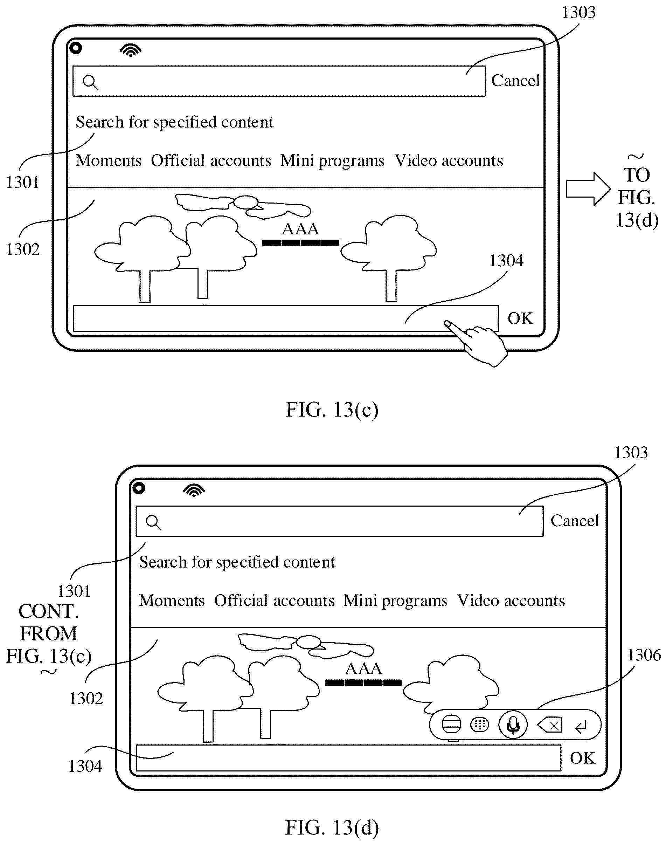

As shown in FIG. 13(c), when the user taps a position on a right side of the input box 1304, the electronic device may determine that a first position of the tap operation on the display interface is located on a right side of the display interface. In this case, the electronic device may display the first window 1306 on the right side of the display interface. For example, as shown in FIG. 13(d), the electronic device may display the first window 1306 above and to the right of the input box 1304 based on a size of the first window 1306 and a right edge of the display interface. There may be a preset distance C between a lower edge of the first window 1306 and an upper edge of the input box 1304, and there may be a preset distance B between a right edge of the first window 1306 and the right edge of the display interface.

As shown in FIG. 14(a), when the user taps a position on a left side of the search box 1303, the electronic device may determine that a first position of the tap operation on the display interface is located on a left side of the display interface. In this case, the electronic device may display the first window 1305 on the left side of the display interface. For example, as shown in FIG. 14(b), the electronic device may display the first window 1305 above and to the left of the input box 1304 based on a size of the first window 1305 and a left edge of the display interface. There may be a preset distance C between a lower edge of the first window 1305 and an upper edge of the input box 1304, and there may be a preset distance A between a left edge of the first window 1305 and the left edge of the display interface.

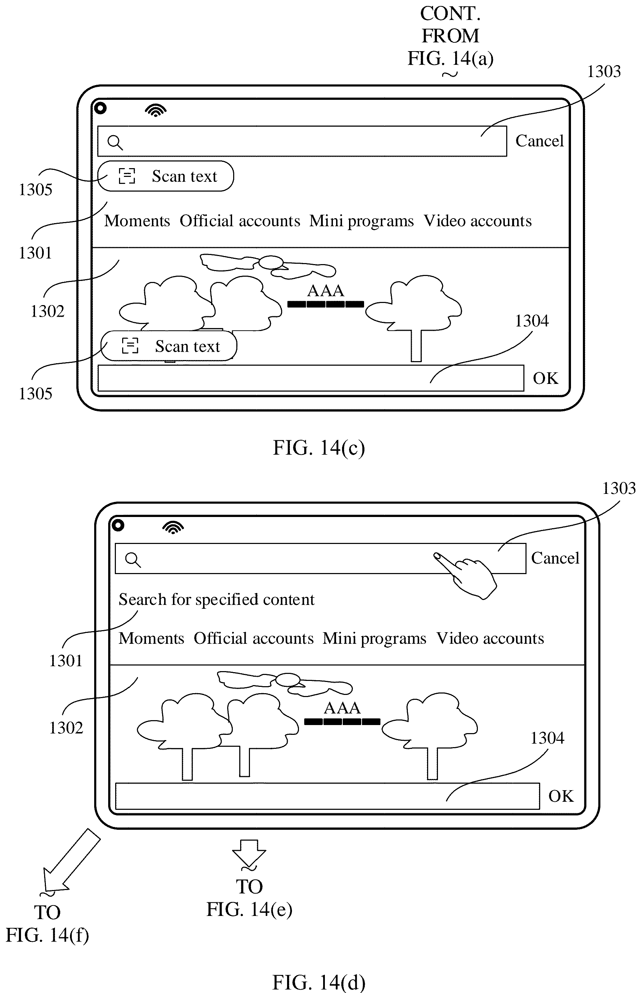

Alternatively, as shown in FIG. 14(c), the electronic device may display the first window 1305 below and to the left of the search box 1303 based on a size of the first window 1305 and a left edge of the display interface. There may be a preset distance D between an upper edge of the first window 1305 and a lower edge of the search box 1303, and there may be a preset distance A between a left edge of the first window 1305 and the left edge of the display interface.

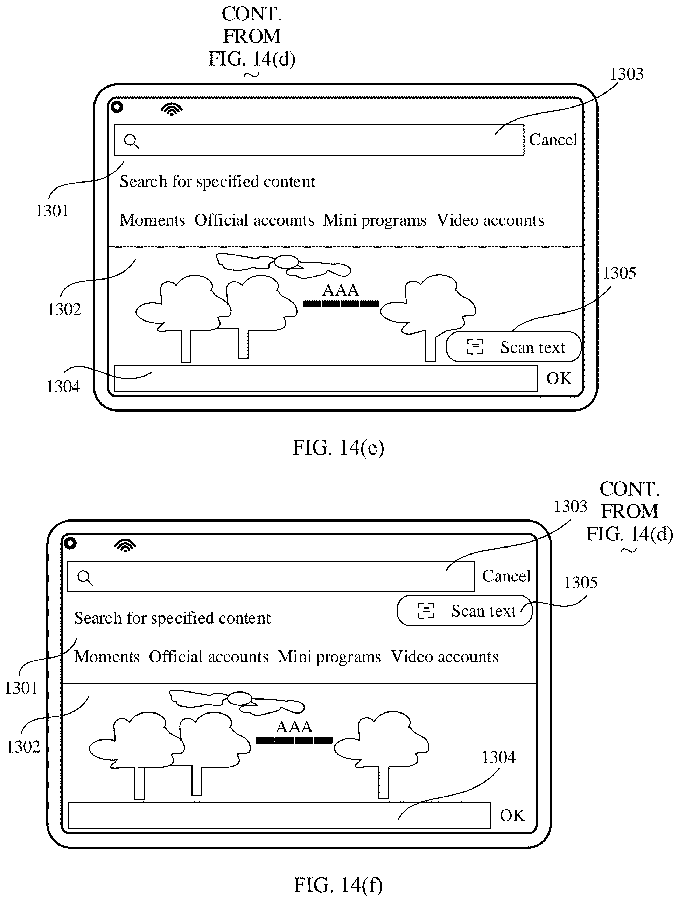

As shown in FIG. 14(d), when the user taps a position on a right side of the search box 1303, the electronic device may determine that a first position of the tap operation on the display interface is located on a right side of the display interface. In this case, the electronic device may display the first window 1305 on the right side of the display interface. For example, as shown in FIG. 14(e), the electronic device may display the first window 1305 above and to the right of the input box 1304 based on a size of the first window 1305 and a right edge of the display interface. There may be a preset distance C between a lower edge of the first window 1305 and an upper edge of the input box 1304, and there may be a preset distance B between a right edge of the first window 1305 and the right edge of the display interface.

Alternatively, as shown in FIG. 14(f), the electronic device may display the first window 1305 below and to the right of the search box 1303 based on a size of the first window 1305 and a right edge of the display interface. There may be a preset distance D between an upper edge of the first window 1305 and a lower edge of the search box 1303, and there may be a preset distance B between a right edge of the first window 1305 and the right edge of the display interface.

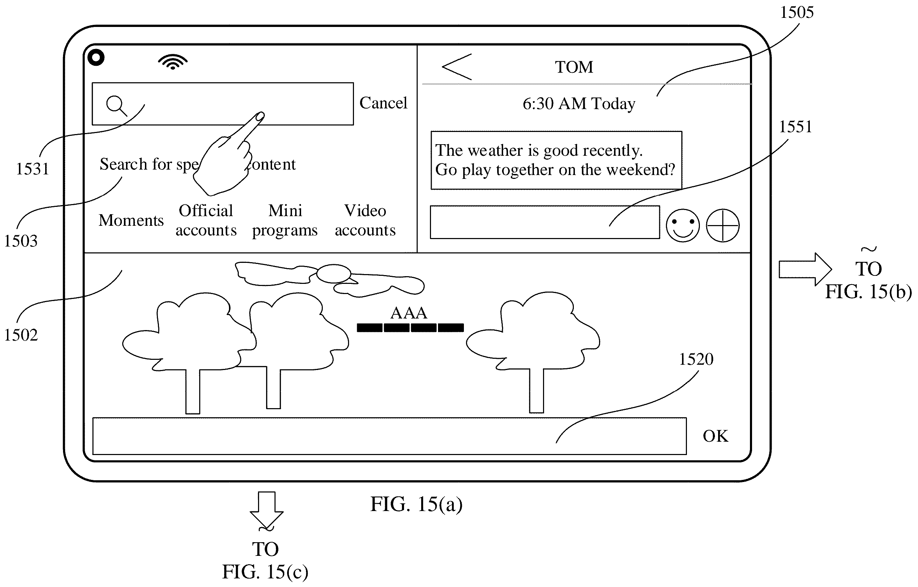

FIG. 15(a) to FIG. 15(h) are a diagram 7 of an application scenario according to an embodiment of this application.

As shown in FIG. 15(a), a display interface of an electronic device may include an upper display region and a lower display region 1502 in an upper-lower split-screen mode, and the upper display region may include a first upper display region 1503 and a second upper display region 1505 in a left-right split-screen mode. An application interface B of an application B (for example, a communication application) may be displayed in the first upper display region 1503, an application interface C corresponding to an application C (for example, a Messages application) may be displayed in the second upper display region 1505, and an application interface A of an application A (for example, a game application) may be displayed in the lower display region 1502.

As shown in FIG. 15(a), a search box 1531 may be displayed in the first upper display region 1503, and the search box 1531 may be located at the top of the first upper display region 1503. An input box 1551 may be displayed in the second upper display region 1505, and the input box 1551 may be located at the bottom of the second upper display region 1505. When a user taps the search box 1531, the electronic device may display a first window 1533 on the display interface. The first window 1533 may include a scan text button and the like. When the user taps the input box 1551, the electronic device may display a first window 1553 on the display interface. The first window 1553 may also include a scan text button, a return button, and the like. An input box 1520 may be displayed in the lower display region 1502, and the input box 1520 may be located at the bottom of the lower display region 1502. When the user taps the input box 1520, the electronic device may display a first window 1522 on the display interface. The first window 1522 may include a text input button, a keyboard button, a voice input button, a deletion button, an enter button, and the like.

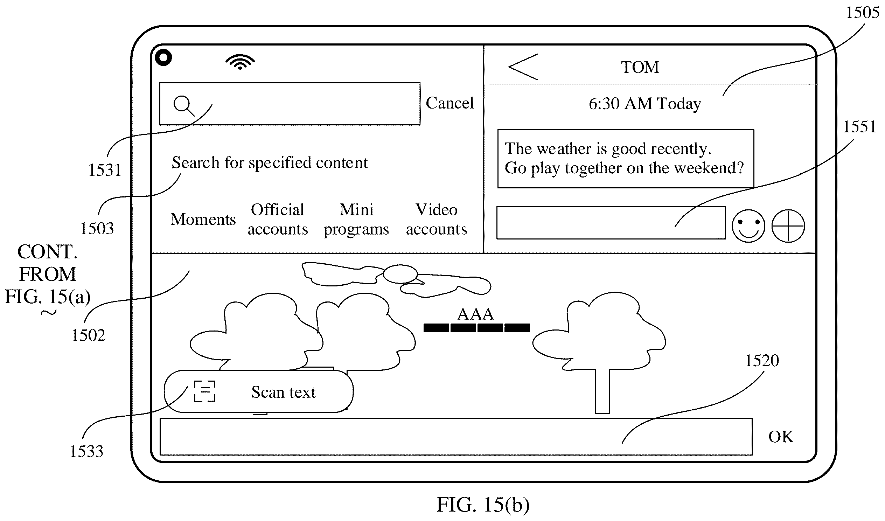

As shown in FIG. 15(a), when the user taps any position in the search box 1531, the electronic device may determine that a first position of the tap operation on the display interface is located on a left side of the display interface. In this case, the electronic device may display the first window 1533 on the left side of the display interface. For example, as shown in FIG. 15(b), the electronic device may display the first window 1533 above and to the left of the input box 1520 based on a size of the first window 1533 and a left edge of the display interface. There may be a preset distance C between a lower edge of the first window 1533 and an upper edge of the input box 1520, and there may be a preset distance A between a left edge of the first window 1533 and the left edge of the display interface.

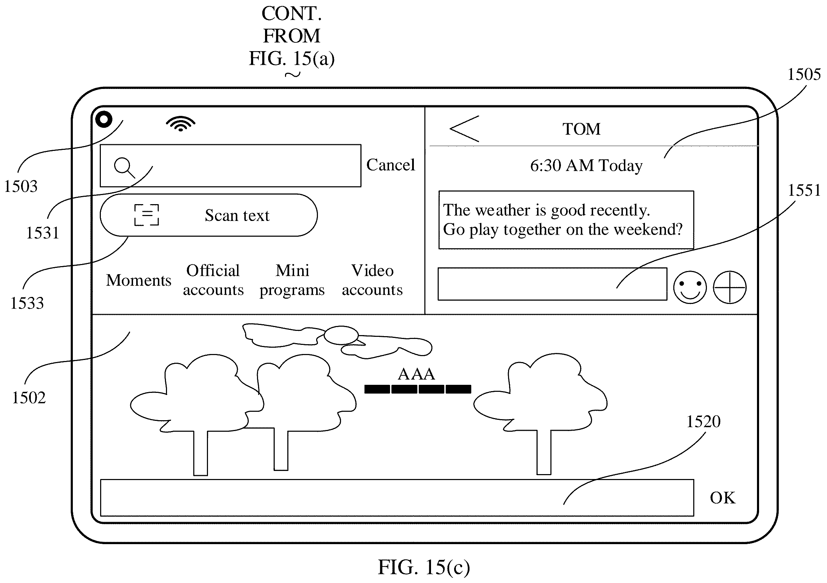

Alternatively, as shown in FIG. 15(c), the electronic device may display the first window 1533 below and to the left of the search box 1531 based on a size of the first window 1533 and a left edge of the display interface. There may be a preset distance D between an upper edge of the first window 1533 and a lower edge of the search box 1531, and there may be a preset distance A between a left edge of the first window 1533 and the left edge of the display interface.

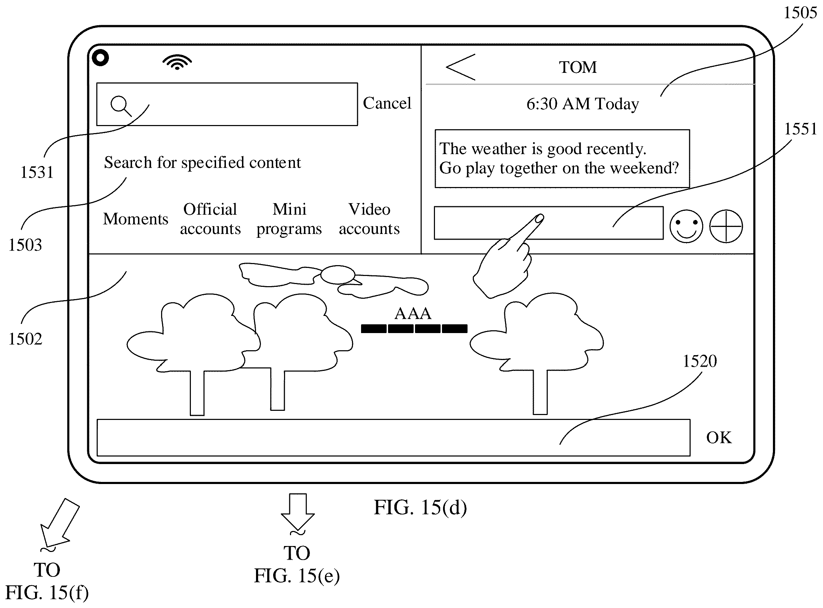

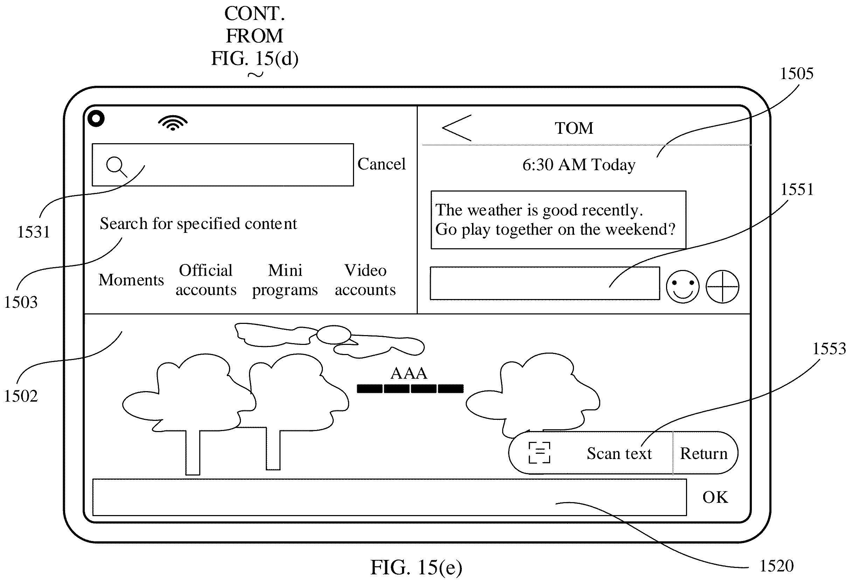

As shown in FIG. 15(d), when the user taps any position in the input box 1551, the electronic device may determine that a first position of the tap operation on the display interface is located on a right side of the display interface. In this case, the electronic device may display the first window 1553 on the right side of the display interface. For example, as shown in FIG. 15(e), the electronic device may display the first window 1553 above and to the right of the input box 1520 based on a size of the first window 1553 and a right edge of the display interface. There may be a preset distance C between a lower edge of the first window 1553 and an upper edge of the input box 1520, and there may be a preset distance B between a right edge of the first window 1553 and the right edge of the display interface.

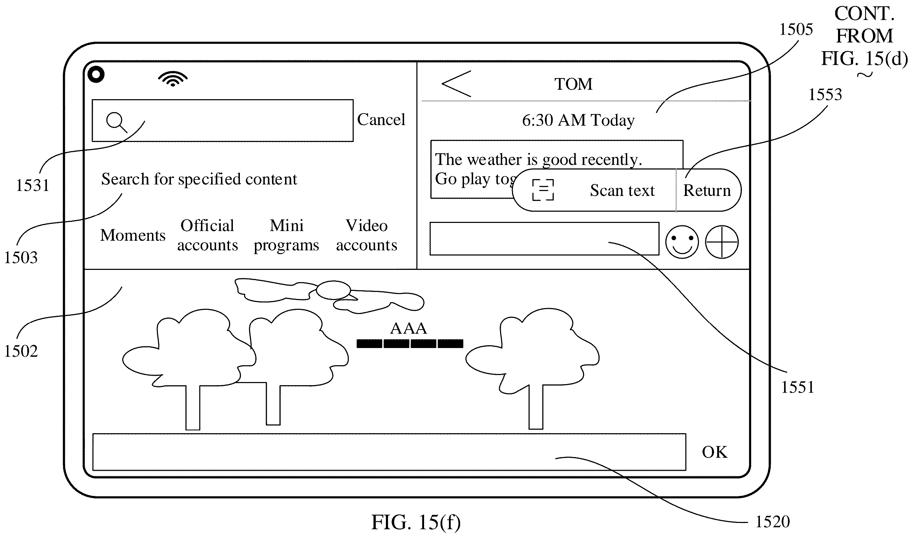

Alternatively, as shown in FIG. 15(f), the electronic device may display the first window 1553 above and to the right of the input box 1551 based on a size of the first window 1553 and a right edge of the display interface. There may be a preset distance C between a lower edge of the first window 1553 and an upper edge of the input box 1551, and there may be a preset distance B between a right edge of the first window 1553 and the right edge of the display interface.

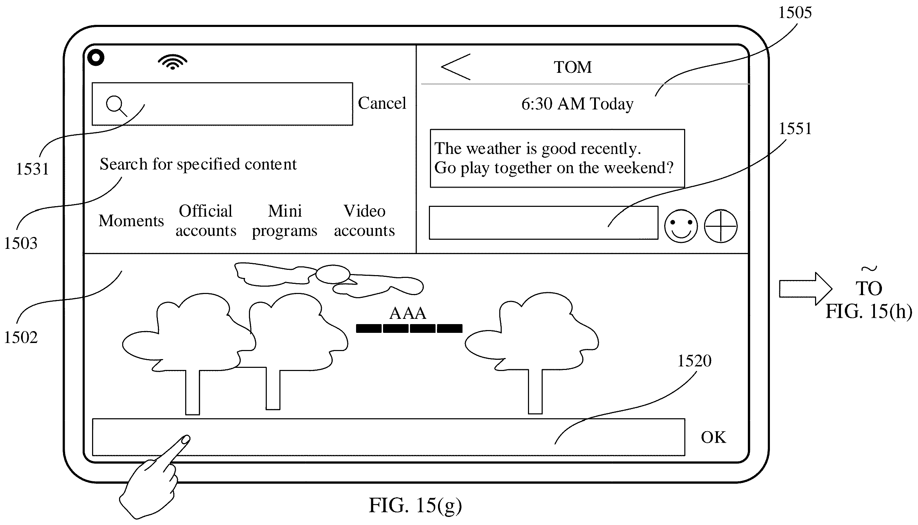

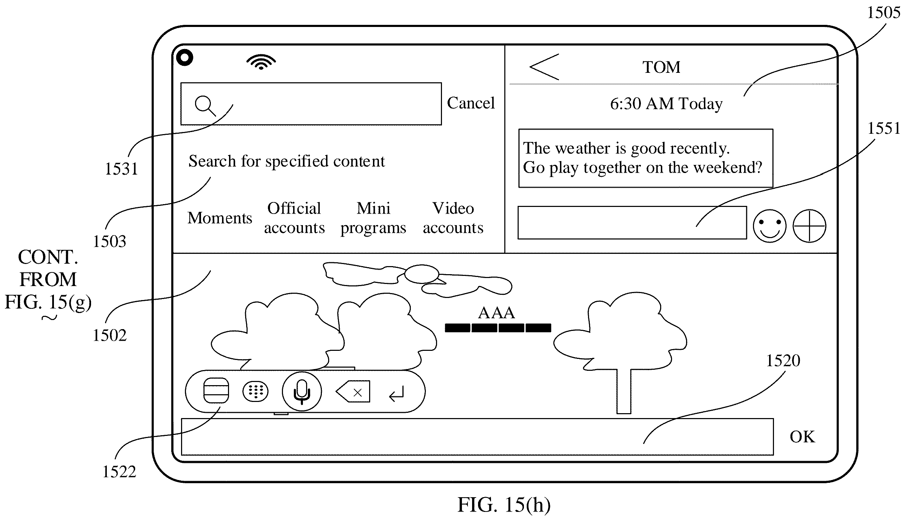

As shown in FIG. 15(g), when the user taps a position on a left side of the input box 1520, the electronic device may determine that a first position of the tap operation on the display interface is located on a left side of the display interface. In this case, the electronic device may display the first window 1522 on the left side of the display interface. For example, as shown in FIG. 15(h), the electronic device may display the first window 1522 above and to the left of the input box 1520 based on a size of the first window 1522 and a left edge of the display interface. There may be a preset distance C between a lower edge of the first window 1522 and an upper edge of the input box 1520, and there may be a preset distance A between a left edge of the first window 1522 and the left edge of the display interface.

### [Embodiment 2]

The following describes in detail an interaction method according to Embodiment 2 of this application with reference to the accompanying drawings and specific application scenarios.

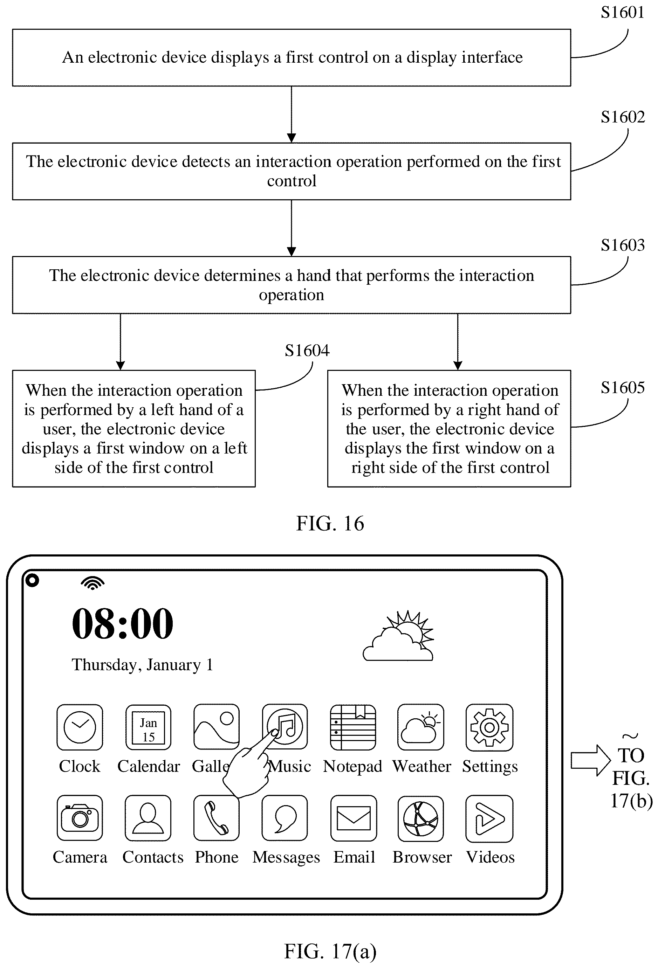

FIG. 16 is a schematic flowchart of an interaction method according to Embodiment 2 of this application. As shown in FIG. 16, the method may include the following steps.

S1601: An electronic device displays a first control on a display interface.

S1602: The electronic device detects an interaction operation performed on the first control.

S1603: The electronic device determines a hand that performs the interaction operation.

S1604: When the interaction operation is performed by a left hand of a user, the electronic device displays a first window on a left side of the first control, where content displayed in the first window is content in response to the interaction operation.

S1605: When the interaction operation is performed by a right hand of the user, the electronic device displays the first window on a right side of the first control.

In this embodiment, the electronic device may display the first control on the display interface, and when detecting the interaction operation performed on the first control, the electronic device may determine the hand that performs the interaction operation. When the interaction operation is performed by the left hand of the user, the electronic device may display the first window on the left side of the first control; or when the interaction operation is performed by the right hand of the user, the electronic device may display the first window on the right side of the first control. The content displayed in the first window is the content in response to the interaction operation. In other words, in this embodiment, when detecting the interaction operation performed on the first control, the electronic device may display the first window based on the left/right hand that performs the interaction operation, so that the displayed first window is close to the hand of the user that performs the interaction operation. This helps the user continue to operate the first window by using the left/right hand, thereby improving user experience.

For example, the first control may be a small control with a small operation region. For example, the first control may be a control with a small operation region, like an application icon, a function button, or a floating bubble. For a manner of determining the small control, refer to the specific content of determining the large control in Embodiment 1. Details are not described herein again.

It should be noted that a manner of identifying the hand that performs the interaction operation is not limited in embodiments, and may be specifically determined based on an actual situation. For example, the electronic device may determine, based on one or more of a capacitance touch contour, an angle of the interaction operation on the display interface, a change of a gyroscope in the electronic device, and a hotspot position of the operation on the display interface, the hand that performs the interaction operation is the left hand or the right hand of the user.

In a possible implementation, when detecting that the user performs the interaction operation by using the left hand, the electronic device may display the first window at a preset position (which may be referred to as a preset position A below) on the left side of the first control; or when detecting that the user performs the interaction operation by using the right hand, the electronic device may display the first window at a preset position (which may be referred to as a preset position B below) on the right side of the first control.

The preset position A and the preset position B may be set by the electronic device by default.

It should be understood that specific positions of the preset position A and the preset position B are not limited in this embodiment, and may be specifically determined based on an actual scenario. For example, the electronic device may determine a comfortable operation region (which may be referred to as a comfortable operation region C below) on the left side of the first control and a comfortable operation region (which may be referred to as a comfortable operation region D below) on the right side of the first control, and may set any position in the comfortable operation region C as the preset position A by default, and set any position in the comfortable operation region D as the preset position B by default. For example, the electronic device may set, by default, the preset position A as a position that is on the left side of the first control and that is at a preset distance (referred to as a preset distance E below) from the first control, and set, by default, the preset position B as a position that is on the right side of the first control and that is at a preset distance (referred to as a preset distance F below) from the first control.

In another possible implementation, when the interaction operation is performed by the left hand of the user, the electronic device may display the first window on the left side of the first control based on a size of the first window and a left edge of the first control; or when the interaction operation is performed by the right hand of the user, the electronic device may display the first window on the right side of the first control based on a size of the first window and a right edge of the first control. Specifically, when the first window is displayed on the left side of the first control, there may be a preset distance (referred to as a preset distance G below) between a right edge of the first window and the left edge of the first control. When the first window is displayed on the right side of the first control, there may be a preset distance (referred to as a preset distance H below) between a left edge of the first window and the right edge of the first control, to facilitate a user operation.

For example, when the first window is displayed on the left side of the first control, the electronic device may determine, based on a size of the first window, whether the left edge of the first window exceeds a left edge of the display interface. When the left edge of the first window exceeds the left edge of the display interface, the electronic device may move the first window rightward, so that the first window can be completely displayed on the display interface. This improves display effect of the first window.

For example, when the first window is displayed on the right side of the first control, the electronic device may determine, based on a size of the first window, whether the right edge of the first window exceeds a right edge of the display interface. When the right edge of the first window exceeds the left edge of the display interface, the electronic device may move the first window leftward, so that the first window can be completely displayed on the display interface. This improves display effect of the first window.

In an example, after detecting the interaction operation performed on the first control, the electronic device may still display the first control on the display interface. In this case, when moving the first window rightward (or leftward), the electronic device may further determine whether the moved first window blocks the first control. When the moved first window blocks the first control, the electronic device may move the first window upward or downward based on an upper edge or a lower edge of the first control, so that the first window does not block the first control. This improves display effect of the interface and user experience.

Optionally, the electronic device may determine, based on a size of the first window and a distance between the upper edge of the first control and an upper edge of the display interface (or a distance between the lower edge of the first control and a lower edge of the display interface), to move the first window upward or downward.

When the distance between the upper edge of the first control and the upper edge of the display interface is less than a height of the first window, the electronic device may determine to move the first window downward; or when the distance between the upper edge of the first control and the upper edge of the display interface is greater than or equal to a height of the first window, the electronic device may determine to move the first window upward.

Alternatively, when the distance between the lower edge of the first control and the lower edge of the display interface is less than a height of the first window, the electronic device may determine to move the first window upward; or when the distance between the lower edge of the first control and the lower edge of the display interface is greater than or equal to a height of the first window, the electronic device may determine to move the first window downward.

It should be noted that when the distance between the upper edge of the first control and the upper edge of the display interface is greater than or equal to the height of the first window, and the distance between the lower edge of the first control and the lower edge of the display interface is greater than or equal to the height of the first window, the electronic device may determine to move the first window upward or downward.

It may be understood that, to help the user operate the first window, when the first window is moved upward, there may be a preset distance between a lower edge of the first window and the upper edge of the first control. Similarly, when the first window is moved downward, there may be a preset distance between an upper edge of the first window and the lower edge of the first control.

FIG. 17(a) to FIG. 17(d) are a diagram 1 of an application scenario according to Embodiment 2 of this application.

As shown in FIG. 17(a), an electronic device may display a home screen on a display interface. Icons of applications such as Clock, Calendar, Gallery, Notepad, Music, Weather, Settings, Camera, Contacts, Phone, Messages, Email, Browser, and Videos may be displayed on the home screen. When a user touches and holds the icon (for ease of description, the icon may be referred to as an icon A below) of the Music application, the electronic device may display a first window 1701 on the display interface. A play local music button, a continue playing button, a search button, and the like may be displayed in the first window 1701.

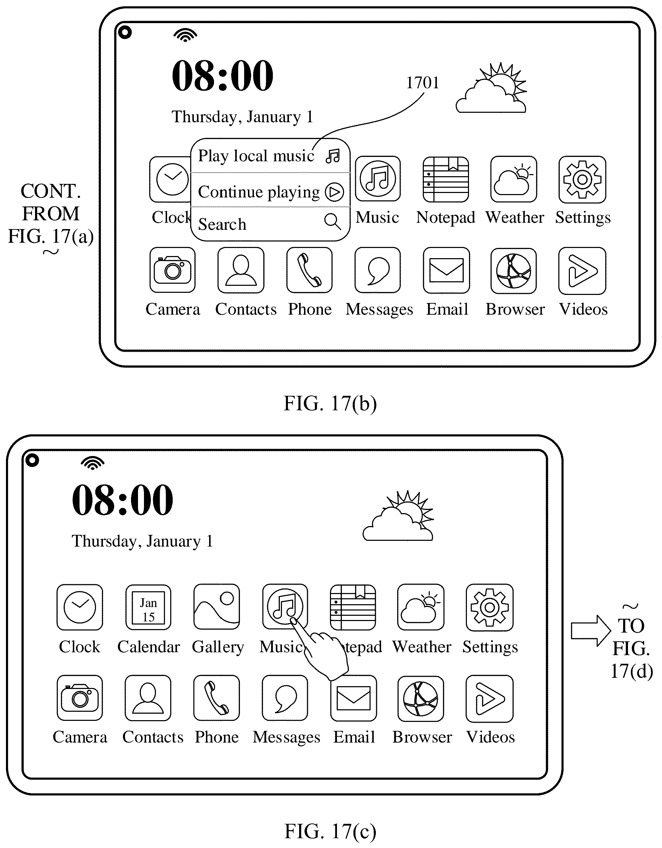

As shown in FIG. 17(a), when the user touches and holds the icon A by using a left hand, the electronic device may determine that an interaction operation is performed by the left hand of the user. In this case, as shown in FIG. 17(b), the electronic device may display the first window 1701 on a left side of the icon A.

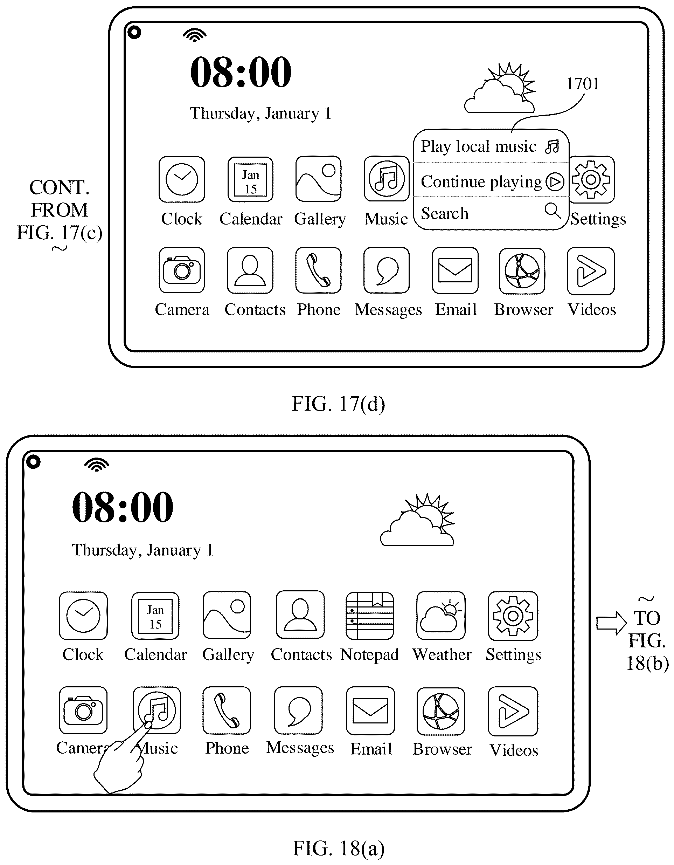

As shown in FIG. 17(c), when the user touches and holds the icon A by using a right hand, the electronic device may determine that the interaction operation is performed by the right hand of the user. In this case, as shown in FIG. 17(d), the electronic device may display the first window 1701 on a right side of the icon A.

FIG. 18(a) to FIG. 18(d) are a diagram 2 of an application scenario according to Embodiment 2 of this application.

As shown in FIG. 18(a), an electronic device may display a home screen on a display interface. Icons of applications such as Clock, Calendar, Gallery, Notepad, Music, Weather, Settings, Camera, Contacts, Phone, Messages, Email, Browser, and Videos may be displayed on the home screen. When a user touches and holds the icon (for ease of description, the icon may be referred to as an icon A below) of the Music application, the electronic device may display a first window 1801 on the display interface. A play local music button, a continue playing button, a search button, and the like may be displayed in the first window 1801.

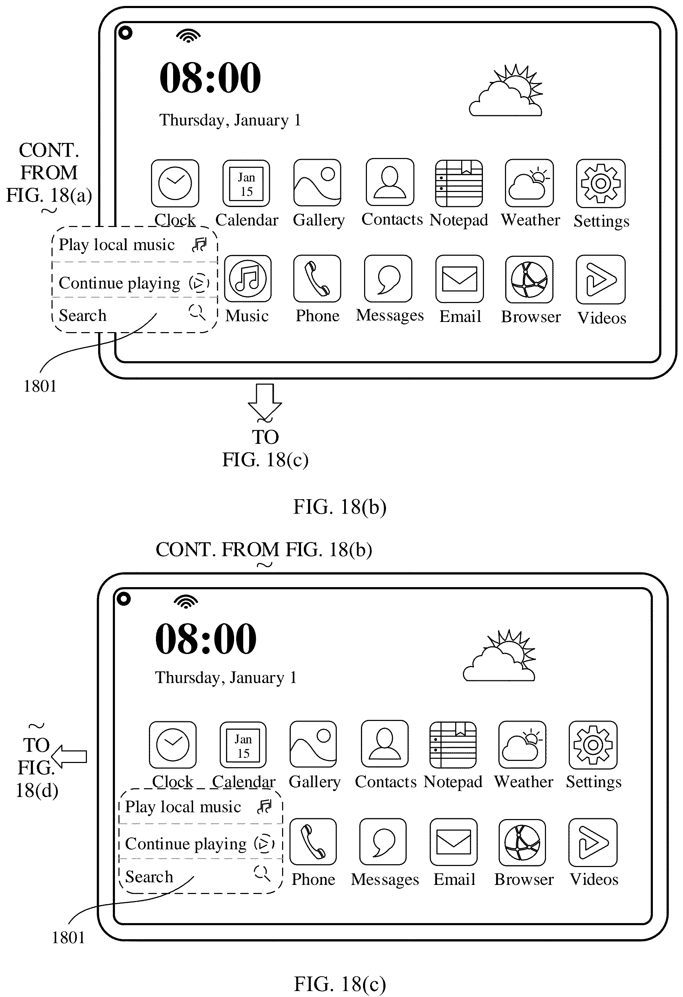

As shown in FIG. 18(a), when the user touches and holds the icon A by using a left hand, the electronic device may determine that an interaction operation is performed by the left hand of the user. In this case, as shown in FIG. 18(b), the electronic device may display the first window 1801 on a left side of the icon A.

When the first window 1801 is displayed on the left side of the icon A, the electronic device may determine, based on a size of the first window 1801 and a distance between a left edge of the icon A and a left edge of the display interface, that a left edge of the first window 1801 may exceed the left edge of the display interface. In other words, the electronic device may determine that the first window 1801 cannot be completely placed on the left side of the icon A. In this case, the electronic device may move the first window 1801 rightward, to move the first window 1801 to be completely located on the display interface, for example, move the first window 1801 rightward to a position shown in FIG. 18(c).

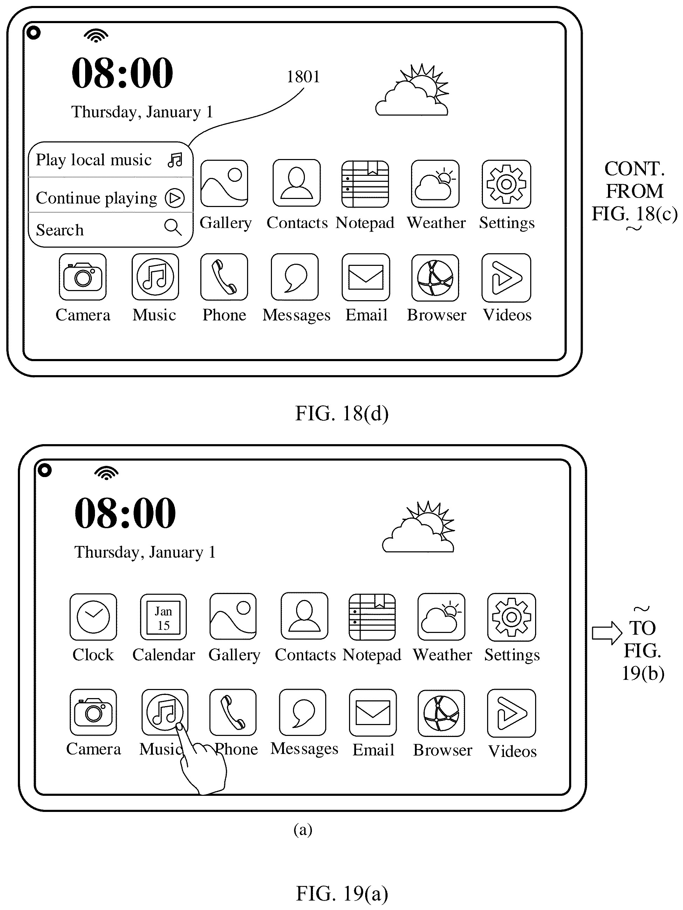

When moving the first window 1801 rightward, the electronic device may determine, based on the size of the first window 1801 and a distance between a left edge of the first control and the left edge of the display interface, that the first window 1801 after the rightward movement blocks the icon A. In this case, the electronic device may determine, based on the size of the first window and a distance between an upper edge of the icon A and an upper edge of the display interface or a distance between a lower edge of the icon A and a lower edge of the display interface, that the first window 1801 cannot be completely placed below the icon A. In this case, the electronic device may move the first window 1801 upward, for example, move the first window 1801 to a position shown in FIG. 18(d). In other words, the first window 1801 finally displayed by the electronic device on the display interface may be shown in FIG. 18(d).

In a possible implementation, the electronic device may display the first window in an animation manner. For example, the first window may be displayed in a gradually expanding manner.

Optionally, when displaying the first window in the gradually expanding manner, the electronic device may determine a natural field of view region on the display interface, and gradually expand the first window based on the natural field of view region. The first window finally displayed on the display interface does not exceed the natural field of view region.

For example, the electronic device may determine a length of the natural field of view region based on a preset angle A and a distance between an eye of the user and the display interface, and determine a height of the natural field of view region based on a preset angle B and the distance between the eye of the user and the display interface. Subsequently, the electronic device may determine the natural field of view region based on a position of the first control and the length and the height of the natural field of view region. A length of the first window in a horizontal direction is less than or equal to the length of the natural field of view region, and a height of the first window in a vertical direction is less than or equal to the height of the natural field of view region.

Specifically, the length of the natural field of view region may be L×tan A, and the height of the natural field of view region may be L×tan B. Herein, L is the distance between the eye of the user and the display interface.

Optionally, the distance L between the eye of the user and the display interface may be a default distance. For example, when the electronic device is a handheld electronic device (for example, a mobile phone or a tablet computer), the distance L may be set to any value, for example, 30 centimeters, 35 centimeters, or 40 centimeters, by default.

Optionally, the distance L between the eye of the user and the display interface may alternatively be obtained by a distance sensor in the electronic device through real-time measurement.

It should be noted that the preset angle A may be a horizontal angle of a line of sight of the eye of the user, and the preset angle B may be a vertical angle of the line of sight of the eye of the user. The preset angle A and the preset angle B may be specifically determined based on an actual situation. This is not specifically shown in this embodiment. For example, the preset angle A may be determined as 15°, and the preset angle B may be determined as 10° based on an actual scenario.

Optionally, when displaying the first window in the gradually expanding manner and determining to display the first window on the left side of the first control, the electronic device may determine an initial position (referred to as an initial position A below) of the first window on the left side of the first control, and display the initial first window at the initial position A. After displaying the initial first window, the electronic device may control the first window to gradually expand in a direction toward the left side of the first control. A final length of the first window is less than or equal to the length of the natural field of view region, and a final height of the first window is less than or equal to the height of the natural field of view region.

Alternatively, when displaying the first window in a gradually expanding manner and determining to display the first window on the left side of the first control, the electronic device may determine a final size of the first window based on the natural field of view region, determine a final position (referred to as a final position C below) of the first window on the left side of the first control based on the final size of the first window, and display the initial first window at the final position C. After displaying the initial first window, the electronic device may control the first window to gradually expand around the first window. A final length of the first window is less than or equal to the length of the natural field of view region, and a final height of the first window is less than or equal to the height of the natural field of view region.

Similarly, when displaying the first window in the gradually expanding manner and determining to display the first window on the right side of the first control, the electronic device may determine an initial position (referred to as an initial position B below) of the first window on the right side of the first control, and display the first window at the initial position B. After displaying the initial first window, the electronic device may control the first window to gradually expand in a direction toward the right side of the first control. A final length of the first window is less than or equal to the length of the natural field of view region, and a final height of the first window is less than or equal to the height of the natural field of view region.

Alternatively, when displaying the first window in a gradually expanding manner and determining to display the first window on the right side of the first control, the electronic device may determine a final size of the first window based on the natural field of view region, determine a final position (referred to as a final position D below) of the first window on the right side of the first control based on the final size of the first window, and display the initial first window at the final position D. After displaying the initial first window, the electronic device may control the first window to gradually expand around the first window. A final length of the first window is less than or equal to the length of the natural field of view region, and a final height of the first window is less than or equal to the height of the natural field of view region.

It should be understood that for a manner of determining the initial position A, the initial position B, the final position C, and the final position D, refer to the foregoing manner of determining the first preset position or the second preset position. Details are not described herein again.

FIG. 19(a) to FIG. 19(d) are a diagram 4 of an application scenario according to Embodiment 2 of this application. The application scenario is illustrated by using an example in which a first window is displayed in a gradually expanding manner.

As shown in FIG. 19(a), an electronic device may display a home screen on a display interface. Icons of applications such as Clock, Calendar, Gallery, Notepad, Music, Weather, Settings, Camera, Contacts, Phone, Messages, Email, Browser, and Videos may be displayed on the home screen. When a user touches and holds the icon (for ease of description, the icon may be referred to as an icon A below) of the Music application, the electronic device may display a first window 1901 on the display interface. A play local music button, a continue playing button, a search button, and the like may be displayed in the first window 1901.

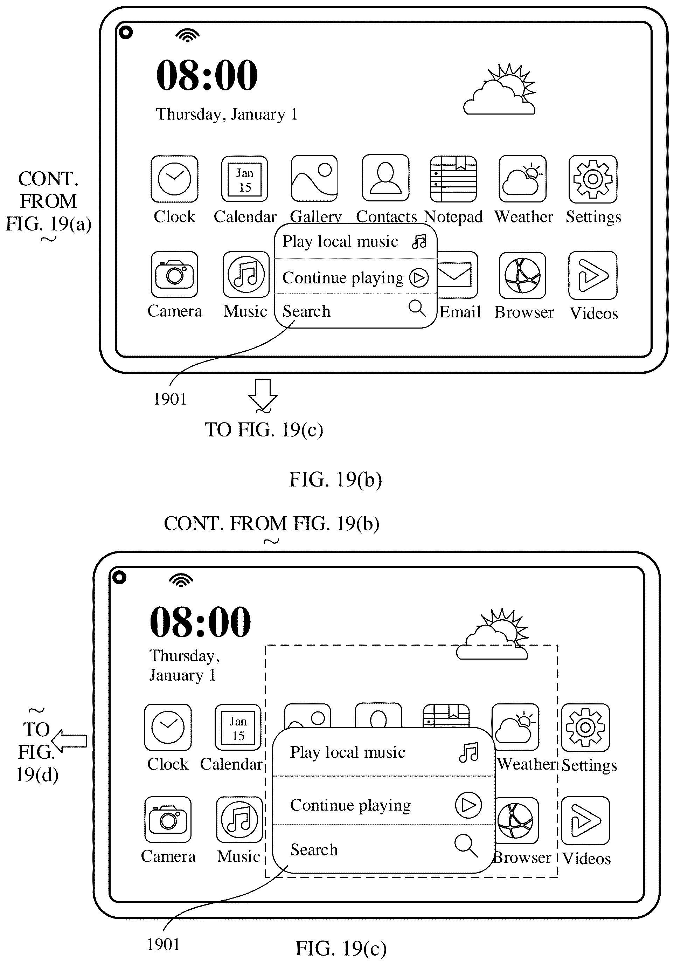

As shown in FIG. 19(a), when the user touches and holds the icon A by using a right hand, the electronic device may determine that the interaction operation is performed by the right hand of the user. In this case, as shown in FIG. 19(b), the electronic device may display the initial first window 1901 on a right side of the icon A.

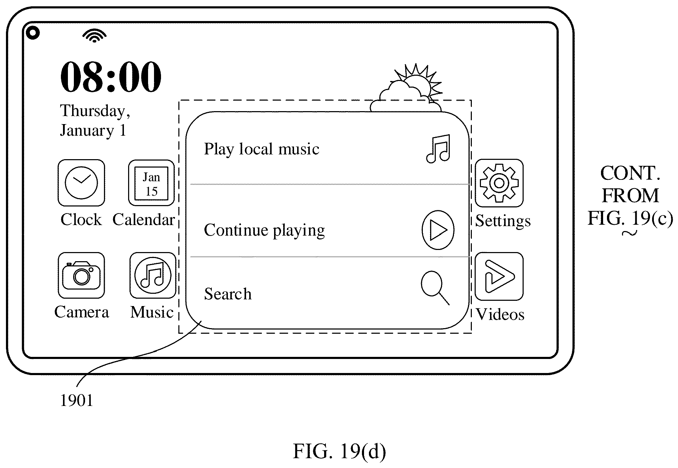

Then, as shown in FIG. 19(c), the electronic device may gradually expand the first window 1901 toward the right side of the icon A. When the electronic device gradually expands the first window toward the right side of the icon A, the electronic device may determine a final length and a final height of the first window 1901 based on a natural field of view region. The final length of the first window 1901 is less than or equal to a length of the natural field of view region, and the final height of the first window 1901 is less than or equal to a height of the natural field of view region. Finally, as shown in FIG. 19(d), the electronic device may display the first window 1901 based on the final length and the final height of the first window 1901.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Corresponding to the interaction methods in the foregoing embodiments, an embodiment of this application further provides an interaction apparatus. Modules in the apparatus may correspondingly implement steps of the interaction methods.

It should be noted that content such as information exchange and execution processes between the foregoing apparatuses/units are based on a same concept as those in the method embodiments of this application. For specific functions and brought technical effect of the foregoing apparatuses/units, refer to the method embodiments. Details are not described herein again.

Persons skilled in the art may clearly understand that, for the purpose of convenient and brief description, division into the foregoing functional units and modules is merely used as an example for illustration. During actual application, the foregoing functions may be allocated to different functional units and modules for implementation based on a requirement. In other words, an inner structure of the apparatus is divided into different functional units or modules, to implement all or some of the functions described above. Functional units or modules in embodiments may be integrated into one processing unit, or each of the units may exist alone physically, or two or more units may be integrated into one unit. The integrated unit may be implemented in a form of hardware, or may be implemented in a form of software functional unit. In addition, specific names of the functional units or modules are merely for ease of distinguishing between the functional units or modules, but are not intended to limit the protection scope of this application. For a specific working process of the units or modules in the foregoing system, refer to a corresponding process in the method embodiments. Details are not described herein again.

An embodiment of this application further provides an electronic device. The electronic device includes at least one memory, at least one processor, and a computer program that is stored in the at least one memory and that is runnable on the at least one processor. When the processor executes the computer program, the electronic device is enabled to implement the steps in any one of the foregoing method embodiments. For example, a structure of the electronic device may be shown in FIG. 3.

An embodiment of this application further provides a computer-readable storage medium. The computer-readable storage medium stores a computer program. When the computer program is executed by a computer, the computer is enabled to implement the steps in any one of the foregoing method embodiments.

An embodiment of this application provides a computer program product. When the computer program product runs on an electronic device, the electronic device is enabled to implement the steps in any one of the foregoing method embodiments.

When an integrated unit is implemented in a form of software function unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments may be implemented. The computer program includes computer program code. The computer program code may be in a source code form, an object code form, an executable file form, some intermediate forms, or the like. The computer-readable storage medium may include at least any entity or apparatus that can carry the computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, the computer-readable storage medium cannot be an electrical carrier signal or a telecommunication signal according to legislation and patent practices.

In the foregoing embodiments, descriptions of embodiments have respective focuses. For a part that is not described in detail or recorded in an embodiment, refer to related descriptions in other embodiments.

Persons of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it shall not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application, and these modifications and replacements shall fall within the protection scope of this application.

## Claims

1. An interaction method, applied to an electronic device, wherein the method comprises:
displaying, by the electronic device, a first control on a display interface;
detecting, by the electronic device, an interaction operation performed on the first control;
determining, by the electronic device, a first position of the interaction operation on the display interface; and
when the first position is located on a left side of the display interface, displaying, by the electronic device, a first window on the left side of the display interface, wherein content displayed in the first window is content in response to the interaction operation; or
when the first position is located on a right side of the display interface, displaying, by the electronic device, the first window on the right side of the display interface.

2. The method according to claim 1, wherein a length of the first control is greater than or equal to a preset length.

3. The method according to claim 1 or 2, wherein displaying, by the electronic device, the first window on the left side of the display interface comprises:
displaying, by the electronic device, the first window at a first preset position on the left side of the display interface.

4. The method according to claim 3, wherein displaying, by the electronic device, the first window at the first preset position on the left side of the display interface comprises:
when the first window is displayed at the first preset position, and a left edge of the first window exceeds a left edge of the display interface, updating, by the electronic device, the first preset position, and displaying the first window at an updated first preset position, so that the left edge of the first window does not exceed the left edge of the display interface.

5. The method according to any one of claims 1 to 4, wherein displaying, by the electronic device, the first window on the right side of the display interface comprises:
displaying, by the electronic device, the first window at a second preset position on the right side of the display interface.

6. The method according to claim 5, wherein displaying, by the electronic device, the first window at the second preset position on the right side of the display interface comprises:
when the first window is displayed at the second preset position, and a right edge of the first window exceeds a right edge of the display interface, updating, by the electronic device, the second preset position, and displaying the first window at an updated second preset position, so that the right edge of the first window does not exceed the right edge of the display interface.

7. The method according to claim 1 or 2, wherein displaying, by the electronic device, the first window on the left side of the display interface comprises:
displaying, by the electronic device, the first window on the left side of the display interface based on a size of the first window and a left edge of the display interface, wherein a left edge of the first window does not exceed the left edge of the display interface.

8. The method according to claim 1, 2, or 7, wherein displaying, by the electronic device, the first window on the right side of the display interface comprises:
displaying, by the electronic device, the first window on the right side of the display interface based on the size of the first window and a right edge of the display interface, wherein a right edge of the first window does not exceed the right edge of the display interface.

9. The method according to claim 1 or 2, wherein displaying, by the electronic device, the first window on the left side of the display interface comprises:
displaying, by the electronic device, the first window on the left side of the display interface based on the first position, a size of the first window, and a left edge of the display interface, wherein a position of the first window on the left side of the display interface is determined based on the first position, or a left edge of the first window does not exceed the left edge of the display interface.

10. The method according to claim 1, 2, or 9, wherein displaying, by the electronic device, the first window on the right side of the display interface comprises:
displaying, by the electronic device, the first window on the right side of the display interface based on the first position, the size of the first window, and a right edge of the display interface, wherein a position of the first window on the right side of the display interface is determined based on the first position, or a right edge of the first window does not exceed the right edge of the display interface.

11. The method according to any one of claims 1 to 10, wherein displaying, by the electronic device, the first window on the left side of the display interface comprises:
when the first window is completely displayable above the first control on the display interface, displaying, by the electronic device, the first window above the first control on the left side of the display interface; or
when the first window is not completely displayable above the first control on the display interface, displaying, by the electronic device, the first window below the first control on the left side of the display interface.

12. The method according to any one of claims 1 to 11, wherein displaying, by the electronic device, the first window on the right side of the display interface comprises:
when the first window is completely displayable above the first control on the display interface, displaying, by the electronic device, the first window above the first control on the right side of the display interface; or
when the first window is not completely displayable above the first control on the display interface, displaying, by the electronic device, the first window below the first control on the right side of the display interface.

13. The method according to any one of claims 1 to 12, wherein the display interface comprises a left display region and a right display region in a left-right split-screen mode; and
after determining, by the electronic device, the first position of the interaction operation on the display interface, the method further comprises:
when the first position is located in the left display region, determining, by the electronic device, that the first position is located on the left side of the display interface; or
when the first position is located in the right display region, determining, by the electronic device, that the first position is located on the right side of the display interface.

14. The method according to any one of claims 1 to 12, wherein the display interface comprises an upper display region and a lower display region in an upper-lower split-screen mode; and
after determining, by the electronic device, the first position of the interaction operation on the display interface, the method further comprises:
when the first position is located on a left side of the upper display region or a left side of the lower display region, determining, by the electronic device, that the first position is located on the left side of the display interface; or
when the first position is located on a right side of the upper display region or a right side of the lower display region, determining, by the electronic device, that the first position is located on the right side of the display interface.

15. An interaction method, applied to an electronic device, wherein the method comprises:
displaying, by the electronic device, a first control on a display interface;
detecting, by the electronic device, an interaction operation performed on the first control;
determining, by the electronic device, whether the interaction operation is performed by a left hand or a right hand; and
when determining that the interaction operation is performed by the left hand, displaying, by the electronic device, a first window on a left side of the first control, wherein content displayed in the first window is content in response to the interaction operation; or
when determining that the interaction operation is performed by the right hand, displaying, by the electronic device, the first window on a right side of the first control.

16. The method according to claim 15, wherein a length of the first control is less than a preset length.

17. The method according to claim 15 or 16, wherein displaying, by the electronic device, the first window on the left side of the first control comprises:
displaying, by the electronic device, the first window at a first preset position on the left side of the first control.

18. The method according to claim 17, wherein displaying, by the electronic device, the first window at the first preset position on the left side of the first control comprises:
when the first window is displayed at the first preset position, and a left edge of the first window exceeds a left edge of the display interface, updating, by the electronic device, the first preset position to obtain a third preset position, and displaying the first window at the third preset position, so that the left edge of the first window does not exceed the left edge of the display interface.

19. The method according to claim 18, wherein displaying, by the electronic device, the first window at the third preset position comprises:
when the first window is displayed at the third preset position, and the first window overlaps the first control, updating, by the electronic device, the third preset position, and displaying the first window at an updated third preset position, so that the first window does not overlap the first control.

20. The method according to any one of claims 15 to 19, wherein displaying, by the electronic device, the first window on the right side of the first control comprises:
displaying, by the electronic device, the first window at a second preset position on the right side of the first control.

21. The method according to claim 20, wherein displaying, by the electronic device, the first window at the second preset position on the right side of the first control comprises:
when the first window is displayed at the second preset position, and a right edge of the first window exceeds a right edge of the display interface, updating, by the electronic device, the second preset position to obtain a fourth preset position, and displaying the first window at the fourth preset position, so that the right edge of the first window does not exceed the right edge of the display interface.

22. The method according to claim 21, wherein displaying, by the electronic device, the first window at the fourth preset position comprises:
when the first window is displayed at the fourth preset position, and the first window overlaps the first control, updating, by the electronic device, the fourth preset position, and displaying the first window at an updated fourth preset position, so that the first window does not overlap the first control.

23. The method according to any one of claims 15 to 22, wherein the first window is a gradually expanding window; and
displaying, by the electronic device, the first window on the left side of the first control comprises:
displaying, by the electronic device, the first window at the first preset position on the left side of the first control, and controlling the first window to gradually expand in a direction toward the left side of the first control.

24. The method according to any one of claims 15 to 23, wherein the first window is the gradually expanding window; and
displaying, by the electronic device, the first window on the right side of the first control comprises:
displaying, by the electronic device, the first window at the second preset position on the right side of the first control, and controlling the first window to gradually expand in a direction toward the right side of the first control.

25. An electronic device, comprising a memory, a processor, and a computer program that is stored in the memory and that is runnable on the processor, wherein when the processor executes the computer program, the electronic device is enabled to implement the interaction method according to any one of claims 1 to 14 or implement the interaction method according to any one of claims 15 to 24.

26. A computer-readable storage medium, wherein the computer-readable storage medium stores a computer program, and when the computer program is executed by a computer, the computer is enabled to implement the interaction method according to any one of claims 1 to 14 or implement the interaction method according to any one of claims 15 to 24.

27. A computer program product, wherein when the computer program product runs on an electronic device, the electronic device is enabled to perform the interaction method according to any one of claims 1 to 14 or the interaction method according to any one of claims 15 to 24.
